# EUROPEAN PATENT SPECIFICATION

(11) **EP 4 620 757 B1**
(45) Date of publication and mention of the grant of the patent: **09.09.2026**
(21) Application number: 23890705.9
(22) Date of filing: 10.11.2023
(51) Int. Cl.: B60W 20/10, B60W 20/30, B60W 30/19, B60W 10/08, B60W 10/10, B60W 10/115

(54) **GEAR-SHIFTING CONTROL METHOD, VEHICLE CONTROLLER, AND HYBRID VEHICLE**
GANGSCHALTUNGSSTEUERUNGSVERFAHREN, FAHRZEUGSTEUERGERÄT UND HYBRIDFAHRZEUG
PROCÉDÉ DE COMMANDE DE CHANGEMENT DE VITESSE, DISPOSITIF DE COMMANDE DE VÉHICULE, ET VÉHICULE HYBRIDE

(30) Priority: 18.11.2022 CN 202211449851
(43) Date of publication of application: 24.09.2025
(73) Proprietor: Zhejiang Geely Powertrain Co., Ltd., Ningbo, Zhejiang 315336 (CN); Zhejiang Geely Holding Group Co., Ltd., Hangzhou, Zhejiang 310051 (CN)
(72) Inventor: JING, Junchao, Hangzhou Bay New District, Ningbo, Zhejiang 315336 (CN); LIU, Yiqiang, Hangzhou Bay New District, Ningbo, Zhejiang 315336 (CN); LI, Qi, Hangzhou Bay New District, Ningbo, Zhejiang 315336 (CN); HUANG, Weishan, Hangzhou Bay New District, Ningbo, Zhejiang 315336 (CN)
(74) Representative: Barker Brettell LLP
(86) International application number: PCT/CN2023/131033
(87) International publication number: WO 2024/104271

(56) References cited:
- CN-A- 109 505 969
- CN-A- 114 001 154
- CN-A- 114 407 864
- CN-A- 114 919 568
- CN-A- 114 919 568
- CN-A- 115 782 850
- FR-A1- 3 106 552
- JP-A- 2012 091 573
- KR-A- 20190 067 375
- KR-B1- 101 566 755
- US-A1- 2001 007 843
- US-A1- 2016 311 439

## Description

### TECHNICAL FIELD

The present disclosure relates to, but is not limited to, the technical field of gear-shifting for vehicles.

### BACKGROUND

Gear-shifting is needed when a vehicle is travelling and can be achieved by simultaneously controlling the disengagement of a to-be-disengaged clutch (Offgoing clutch) and the engagement of a to-be-engaged clutch (Oncoming clutch). The performance of the gear-shifting control significantly impacts the driving performance. However, the current performance of the gear-shifting process needs to be improved.

CN114919568A discloses a gear shifting control method which is applied to a hybrid power vehicle, a gearbox of the hybrid power vehicle comprises a first clutch and a second clutch, the first clutch is a clutch to be separated, the second clutch is a clutch to be combined, and the method comprises the steps that according to a first transmission ratio and a second transmission ratio, the first clutch is a clutch to be separated, and the second clutch is a clutch to be combined; the inertia torque generated by an input shaft of the gearbox after gear shifting is determined, the first transmission ratio is the transmission ratio of a gear set corresponding to the first clutch, and the second transmission ratio is the transmission ratio of a gear set corresponding to the second clutch; during the shift, the torque of the input shaft is adjusted according to the inertia torque.

CN114001154A discloses a control method of a gear shifting target rotational speed, comprising the following steps: S1: Calculate the final clutch combined target speed; S2: Calculate the minimum speed regulation time; S3: Design an appropriate target speed regulation time, and check whether the target speed regulation time is within a reasonable speed regulation range; S4: Calculate the steady-state gradient of speed regulation; S5: Calculate the speed difference; S6: Calculate the shift target speed; S7: The genetic optimization algorithm is used to distribute the engine torque and the ISG motor torque in the total torque of speed regulation, so as to minimize the energy loss in the process of shifting and speed regulation.

### SUMMARY

The following is a summary of the subject matter described in detail herein. The present invention is as defined in the appended claims.

An embodiment of the present disclosure provides a gear-shifting control method, applied to a hybrid vehicle including an engine, a first motor and a transmission, the transmission receiving power transmitted by the engine and the first motor through an input shaft, and the method includes: in a gear-shifting process between adjacent gears, performing following processing in each control cycle of a gear-shifting speed regulation phase:
determining a total speed regulation intervention torque Tsum according to a target angular acceleration and a rotational inertia, and pre-distributing Tsum into an input shaft intervention torque Taxis and a clutch intervention torque Tclutch; and
when Taxis does not exceed a torque intervention capability of the first motor, distributing Taxis to the first motor, and controlling the first motor to provide a speed regulation intervention torque distributed to the first motor.

An embodiment of the present disclosure further provides a vehicle controller, applied to a hybrid vehicle, including a processor and a memory storing a computer program, where the gear-shifting control method described in any embodiment of the present disclosure can be implemented when the computer program is executed by the processor.

An embodiment of the present disclosure also provides a vehicle, including the vehicle controller described in any embodiment of the present disclosure.

An embodiment of the present disclosure further provides a non-transient computer-readable storage medium, the computer-readable storage medium storing a computer program, when the computer program is executed by a processor, the gear-shifting control method described in any embodiment of the present disclosure is implemented.

According to the gear-shifting control method and apparatus of the above-mentioned embodiments of the present disclosure, a speed regulation intervention torque can be reasonably distributed in a gear-shifting speed regulation phase, so as to make full use of the accuracy and rapidity of the motor speed regulation, and improve the performance of the gear-shifting process.

Other aspects will be apparent upon reading and understanding the drawings and detailed description.

### BRIEF DESCRIPTION OF DRAWINGS

FIG. 1 is a schematic diagram of a hybrid vehicle in a series mode according to an embodiment of the present disclosure.
FIG. 2 is a schematic diagram of a hybrid vehicle in a parallel mode according to an embodiment of the present disclosure.
FIG. 3 is a schematic diagram of a hybrid architecture according to an embodiment of the present disclosure.
FIG. 4 is a flow chart of a gear-shifting control method according to an embodiment of the present disclosure.
FIG. 5A is a progress percentage curve of an oncoming clutch without correction.
FIG. 5B is a progress percentage curve of an oncoming clutch after correction according to an embodiment of the present disclosure.
FIG. 5C is a progress percentage curve of an offgoing clutch without correction.
FIG. 5D is a progress percentage curve of an offgoing clutch after correction according to an embodiment of the present disclosure.
FIG. 6 is a schematic diagram of oil pressure changes during an oil-filling control phase according to an embodiment of the present disclosure.
FIG. 7 is a flow chart of a gear-shifting control method according to another embodiment of the present disclosure.
FIG. 8A is a schematic diagram of gradient control of angular acceleration when a current gear-shifting type is power-on upshift or power-off upshift according to an embodiment of the present disclosure.
FIG. 8B is a schematic diagram of gradient control of angular acceleration when a current gear-shifting type is power-on downshift or power-off downshift according to an embodiment of the present disclosure.
FIG. 9 is a hardware structure diagram of a gear-shifting control apparatus according to an embodiment of the present disclosure.

### DESCRIPTION OF EMBODIMENTS

The technical solutions in embodiments of the present disclosure will be clearly and completely described in the following, with reference to the drawings in the embodiments of the present disclosure. Obviously, the described embodiments are only part of the embodiments of the present disclosure, not all of them. Based on the embodiments in the present disclosure, all other embodiments obtained by those skilled in the art without paying creative work are within the scope of protection of the present disclosure.

In the description of the present disclosure, words such as "exemplary" or "for example" are used to indicate examples, illustrations or descriptions. Any embodiment described as "exemplary" or "for example" in the present disclosure should not be interpreted as being more preferred or advantageous than other embodiments. "And/or" herein is a description of the association relationship of associated objects, indicating that three relationships may exist, for example, A and/or B can represent the following three situations: A exists alone, A and B exist at the same time, and B exists alone. In the description of the present disclosure, "multiple" means at least two, such as two, three, etc., unless otherwise clearly and specifically defined.

It should be noted that the directional indications (such as up, down, left, right, front, and back) in the embodiments of the present disclosure are only used to explain the relative positional relationship, movement, etc. between the components under a certain specific posture (as shown in the accompanying drawings), rather than indicating or implying that the structure referred to has a specific orientation, is constructed and operated in a specific orientation. If the specific posture changes, the directional indication will also change accordingly. Therefore, it cannot be understood as a limitation of the present disclosure. In addition, the descriptions of "first", "second", etc. in the embodiments of the present disclosure are only used for descriptive purposes, and cannot be understood as indicating or implying their relative importance or implicitly indicating the number of technical features indicated. Therefore, the features defined as "first" and "second" may explicitly or implicitly include at least one of such features.

In the present disclosure, unless otherwise clearly specified and limited, the terms "connection", "fixation", etc. should be understood in a broad sense. For example, "fixation" can be a fixed connection, a detachable connection, or an integral connection; it can be a mechanical connection or an electrical connection; it can be a direct connection or an indirect connection through an intermediate medium, it can be an internal connection of two elements or an interaction relationship between two elements, unless otherwise clearly defined. For those skilled in the art, the specific meanings of the above terms in the present disclosure can be understood according to specific circumstances.

The technical solutions between the various embodiments of the present disclosure can be combined with each other, provided that those skilled in the art can implement such combination. When the combination of technical solutions is contradictory or cannot be implemented, it should be deemed that such combination of technical solutions does not exist and is not within the protection scope claimed by the present disclosure.

With the increasingly stringent requirements on fuel consumption and emissions, as well as the development of electrification systems, hybrid technology becomes the key to achieving energy conservation and emission reduction. In order to adapt to and meet emission requirements, vehicle manufacturers and parts suppliers are looking for solutions. At present, the battery technology in pure electric vehicle technology systems is complex and costly, so hybrid systems are vigorously promoted.

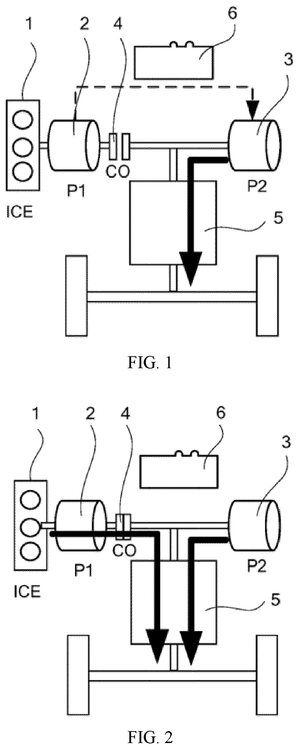

The gear-shifting control method in the embodiments of the present disclosure can be applied to hybrid vehicles. The dual-motor hybrid system has three modes: pure electric mode, series mode and parallel mode, and the hybrid vehicle can switch between these modes. As shown in FIG. 1 and FIG. 2, the hybrid vehicle includes a first power mechanism and a second power mechanism, the first power mechanism includes an engine 1 (indicated by ICE (Internal Combustion Engine) in the figure) and a second motor 2 (indicated by P1 in the figure, the second motor can be used to realize the function of generating electricity to charge the battery, so as to drive the engine to start, etc.), which are connected, the second power mechanism includes a first motor 3 (indicated by P2 in the figure, the first motor 3 can also be referred to as a driving motor), and a clutch 4 (indicated by C0 in the figure) for mode-switching, the clutch 4 is connected between the first motor 3 and the second motor 2. FIG. 1 is a schematic diagram of a driving mode of a hybrid vehicle in series mode. In series mode, the clutch 4 is in a disengaged state, the engine 1 supplies power to a battery 6 and the first motor 3 through the second motor 2, and the first motor 3 drives wheels through a transmission 5. FIG. 2 is a schematic diagram of a driving mode of a hybrid vehicle in parallel mode. In parallel mode, the clutch 4 is in an engaged state (also called a coupled state), and the engine 1 and the first motor 3 drive the wheels together through the transmission 5.

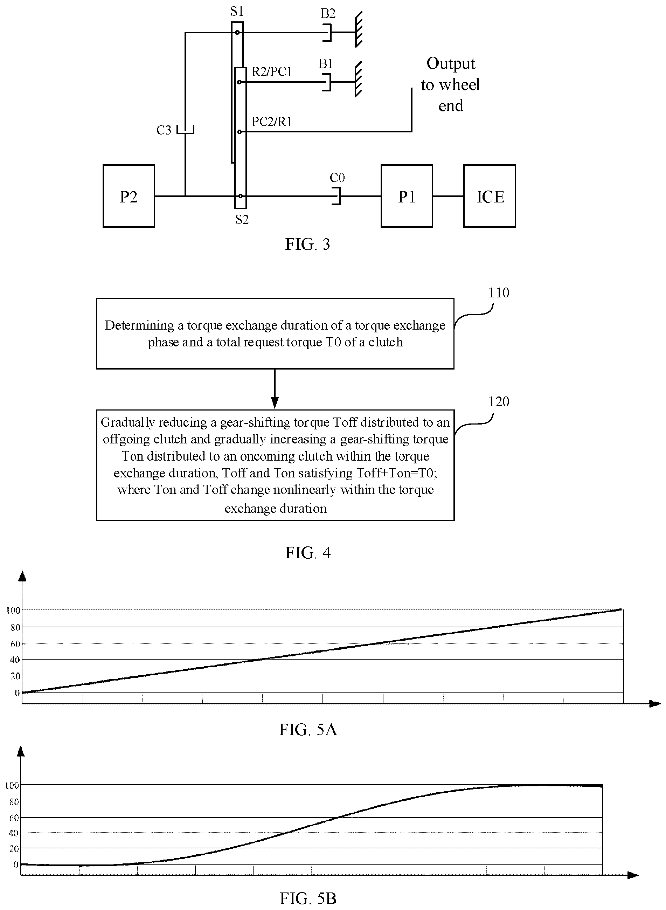

The gear-shifting control method in the embodiments of the present disclosure can be applied to the hybrid architecture shown in FIG. 3. As shown in the figure, the hybrid architecture includes a first power mechanism, a second power mechanism and a transmission mechanism. The first power mechanism includes an engine ICE and a second motor P1, which are connected to each other, and the second power mechanism includes a first motor P2. The transmission mechanism includes a fourth clutch C0 that can be used for mode-switching, a double-row planetary gear, a first clutch B1, a second clutch B2 and a third clutch C3 that can be used for gear-shifting control. The double-row planetary gear includes a first planetary gear consisting of a first sun gear S1, a first planet carrier PC1 and a first ring gear R1, and a second planetary gear consisting of a second sun gear S2, a second planet carrier PC2 and a second ring gear R2.

As shown in the figure, an output shaft of the second motor P1 can be connected to the second sun gear S2 through the fourth clutch C0 to drive the second sun gear S2. An output shaft of the first motor P2 is connected to the second sun gear S2 to drive the second sun gear S2. The output shaft of the first motor P2 can also be connected to the first sun gear S1 through the third clutch C3 to drive the first sun gear S1. The first sun gear S1 is connected to one end of the second clutch B2, and the other end of the second clutch B2 is connected to a hydraulic system. The first planetary carrier PC1 is connected to the second ring gear R2, and the first planetary carrier PC1 and the second ring gear R2 are both connected to one end of the first clutch B1, and the other end of the first clutch B1 is connected to the hydraulic system. The first ring gear R1 is connected to the second planetary carrier PC2. The power input to the double-row planetary gear is transmitted to a wheel end from an output shaft connected to the first ring gear R1 and the second planetary carrier PC2.

The above hybrid architecture can realize the switching among three gears included in a driving gear. Among the first clutch B1, the second clutch B2 and the third clutch C3, when only the first clutch B1 is engaged, the gear is a first gear, when only the second clutch B2 is engaged, the gear is a second gear, and when only the third clutch C3 is engaged the gear is a third gear. The switching among the gears can be realized by disengaging one of the clutches (i.e., the offgoing clutch) and engaging the other clutch (i.e., the oncoming clutch). The offgoing clutch can also be referred to as an active clutch, and the oncoming clutch can also be referred to as an inactive clutch. After states of the offgoing clutch and the oncoming clutch are changed, a change in the power transmission path causes change in the transmission ratio, thereby realizing gear-shifting.

It can be understood that, for example, the first clutch B1 serves as an offgoing clutch at a first moment and is controlled to be disengaged, and serves as an oncoming clutch at a second moment and is controlled to be engaged; where the first moment and the second moment represent different moments, which does not indicate a chronological sequence thereof. For example, a current gear is the first gear, the first clutch B1 is engaged, and the second clutch B2 and the third clutch C3 are disengaged; in order to shift from the first gear to the second gear, the first clutch B1 is controlled to serve as an offgoing clutch, and is controlled to be disengaged; the second clutch B2 is controlled to serve as an oncoming clutch, and is controlled to be engaged; and the third clutch C3 is controlled to remain unchanged, and is controlled to remain disengaged; in order to shift from the second gear to the third gear, the first clutch B1 is controlled to remain unchanged, and is controlled to remain disengaged; the second clutch B2 is controlled to serve as an offgoing clutch, and is controlled to be disengaged; and the third clutch C3 is controlled to serve as an oncoming clutch, and is controlled to be engaged.

Regardless of whether the hybrid vehicle operates in a series mode or a parallel mode, gear-shifting control is necessary. The performance of gear-shifting control significantly impacts driving performance. Currently, the performance of a gear-shifting process needs to be improved. Although the above shows a hybrid architecture to which the embodiments of the present disclosure can be applied, the gear-shifting control method provided by the embodiments of the present disclosure is not limited to a specific hybrid architecture.

The gear-shifting process in the embodiments of the present disclosure includes three phases. When a gear-shifting type is power-on upshift (Power on up) and power-off downshift (Power off down), a sequence of the three phases is as follows: an oil-filling phase, a torque exchange phase and a gear-shifting speed regulation phase; and when a gear-shifting type is power-on downshift (Power on down) and power-off upshift (Power off up), a sequence of the three phases is as follows: the oil-filling phase, the gear-shifting speed regulation phase and the torque exchange phase. Among them, the power-on upshift can also be referred to as a stepping gas pedal upshift, the power-on downshift can also be referred to as a stepping gas pedal downshift, the power-off upshift can also be referred to as a loosing gas pedal upshift, and the power-off downshift can also be referred to as a loosing gas pedal downshift.

Before the engagement of an oncoming clutch, there is a certain gap between an active portion (such as an active disc) and a driven portion (such as a driven disc) of the clutch. During the oil-filling phase, oil-filling control is carried out for the oncoming clutch, so as to quickly eliminate the gap, and enable the oncoming clutch to reach a torque transmission state in a relatively short time. The speed of oil-filling for the clutch and the pressure followability after the filling have an important influence on the driving performance and power response during the gear-shifting process.

During the torque exchange phase, the disengagement of the offgoing clutch and the engagement of the oncoming clutch are performed synchronously, and the torque of the clutch is changed from the offgoing clutch to the oncoming clutch.

During the speed regulation phase, a transmission control unit sends a torque reduction or torque increase request to generate an inertial torque (Inertial torque), which is also called a speed regulation intervention torque. Under the action of the inertial torque, a rotation speed of a power mechanism (such as an engine) is changed until a target rotation speed is reached.

In the torque exchange phase, the torque control for the offgoing clutch and the oncoming clutch is performed according to a set time interval, which can be achieved based on a progress percentage. The progress percentage is equal to a ratio of a current exchange duration to a torque exchange duration (i.e., a duration of the torque exchange phase), and the current exchange duration is equal to a current moment minus a start moment of the torque exchange phase. In some exemplary implementations, during the torque exchange process, gear-shifting torques distributed to the offgoing clutch and the oncoming clutch change linearly (i.e., an absolute value of a gradient of a gear-shifting torque remains unchanged), where a gear-shifting torque distributed to the offgoing clutch decreases linearly with time, while a gear-shifting torque distributed to the oncoming clutch increases linearly with time. However, the gear-shifting torque distributed to the clutch is a request torque of the clutch, and an actual torque generated when torque control is performed is also related to a response characteristic of a torque control system. For example, a response speed of the torque control system to the same request torque varies at different control phases. This variation in the response speed will cause a phenomenon of torque uprush and bulging, affecting the smoothness of the gear-shifting.

An embodiment of the present disclosure provides a gear-shifting control method for improving torque exchange, as shown in FIG. 4 to FIG. 6. The gear-shifting control method for improving torque exchange in the embodiment of the present disclosure is not limited to hybrid vehicles, but can also be used for gear-shifting control of fuel vehicles and electric vehicles, that is, it can be used for shifting between adjacent gears (such as a first gear and a second gear, the second gear and a third gear), and can also be used for cross-gear switching (such as the first gear and the third gear).

As shown in FIG. 4, including:
Step 110, determining a torque exchange duration of a torque exchange phase and a total request torque T0 of a clutch.

In an exemplary embodiment of the present disclosure, the total request torque of the clutch may be equal to a request torque of an offgoing clutch before torque exchange.

Step 120, gradually reducing a gear-shifting torque Toff distributed to an offgoing clutch and gradually increasing a gear-shifting torque Ton distributed to an oncoming clutch within the torque exchange duration, Toff and Ton satisfying Toff+Ton=T0;
where Ton and Toff are set to change nonlinearly within the torque exchange duration to suppress an influence of a change of a response speed of a torque control system on the smoothness of the torque exchange.

In an exemplary embodiment of the present disclosure, the response speed of the torque control system at the beginning of the torque exchange is fast, and then the response speed slows down. In this case, the absolute values of the gradients of Ton and Toff can be controlled to change from small to large within the torque exchange duration, where the absolute values of the gradients of Ton and Toff reflect change speeds of Ton and Toff. In this case, although the response speed of the hydraulic system is relatively fast at the beginning, due to a relatively slow change of Ton and Toff, the torque uprush can be suppressed to avoid the phenomenon of bulging, thereby improving the smoothness of the gear-shifting. After the absolute values of the gradients of Ton and Toff change from small to large, the response speed of the torque control system tends to be stable. At this time, the change speeds of Ton and Toff can be maintained, or the change speeds of Ton and Toff can be reduced so that the later phase of the torque exchange can be stable until the end. During the entire torque exchange duration, the absolute values of the gradients of Ton and Toff first change from small to large, and then can be set to change from large to small, or be set to remain unchanged, or be set to follow other change patterns such as changing from large to small and then remaining unchanged, etc.

In another exemplary embodiment of the present disclosure, the response speed of the torque control system is relatively slow at the beginning of the torque exchange, and then the response speed gets faster. In this case, the absolute values of the gradients of Ton and Toff can be controlled to change first from large to small within the torque exchange duration. The phenomenon of torque uprush caused by the change in the response speed of the torque control system can also be suppressed, making the torque exchange smoother. After the absolute values of the gradients of Ton and Toff change from large to small, the absolute values of the gradients of Ton and Toff can be set to remain unchanged, or be set to change from small to large, or be set to follow other change patterns.

According to the gear-shifting control method of the present embodiment, gear-shifting torques distributed to the offgoing clutch and the oncoming clutch are no longer simply set to be changed linearly, but are set to be changed non-linearly according to the response characteristic of the torque control system to suppress the influence of the change in the response speed of the torque control system on the smoothness of the torque exchange, thereby improving the smoothness of the gear-shifting process. The torque control system in embodiments of the present disclosure refers to a torque control system for controlling the torque of the clutch, which can be a hydraulic system but is not limited thereto.

In another exemplary embodiment of the present disclosure, the torque control system is a hydraulic system, and the absolute values of the gradients of Ton and Toff are set to change from small to large (such as monotonically increasing) within the torque exchange duration. This is a setting made for the situation where the response speed of the hydraulic system is relatively fast at the beginning of the torque exchange and then the response speed slows down, so as to suppress the influence of the change in the response speed of the hydraulic system on the smoothness of the torque exchange, where the hydraulic system may be an oil- pressure system. After the absolute values of the gradients of Ton and Toff change from small to large, they may remain unchanged, or change from large to small (such as monotonically decreasing).

In an exemplary embodiment of the present disclosure, the gradually reducing the gear-shifting torque Toff distributed to the offgoing clutch and gradually increasing the gear-shifting torque Ton distributed to the oncoming clutch within the torque exchange duration includes:
during the torque exchange duration, performing the following processing at a set time interval: obtaining an initial progress percentage based on a ratio of a current exchange duration to the torque exchange duration; and correcting the initial progress percentage, and calculating Toff and Ton based on a corrected progress percentage and T0; where during the torque exchange duration, an absolute value of a gradient of the corrected progress percentage first changes from small to large and then from large to small, or first changes from small to large and then remains unchanged. The above-mentioned current exchange duration is equal to a current moment minus a start moment of the torque exchange phase.

In an example of the present embodiment, the correcting the initial progress percentage includes: adding a current correction value to the initial progress percentage to obtain a corrected progress percentage; where the current correction value is calculated based on a trigonometric function with the initial progress percentage as an independent variable. For example, the current correction value is calculated based on the following formula: X = sin (P0 × 0.0628) × k, where X is the current correction value, P0 is the initial progress percentage, k represents a correction coefficient, and k is determined according to a total request torque of the clutch, e.g., obtained by looking up a table according to the total request torque of the clutch. This example corrects the progress percentage of the torque exchange by introducing a sin curve, but the sine function can be replaced by a cosine function, or other function forms that can make the absolute value of the gradient of the corrected progress percentage change from small to large can be introduced.

In an example of the present embodiment, Toff and Ton calculated based on the corrected progress percentage and T0 satisfies Ton=T0×P' and Toff=T0×(100%-P), where P' is the corrected progress percentage. There can be many specific calculation processes for Toff and Ton. For example, Toff can be calculated first and then Ton is obtained by T0 minus Toff; or, Ton can be calculated first and then Toff is obtained by T0 minus Ton, or, Toff and Ton can be directly calculated using the formula Ton=T0×P', Toff=T0×(100%-P'). P' can also represent the corrected progress percentage of the offgoing clutch, and (100%-P') represents the corrected progress percentage of the oncoming clutch.

In an example of the present embodiment, the corrected progress percentage P' of the offgoing clutch = ((current exchange duration/torque exchange duration) × 100 + correction value) %; where (current exchange duration/torque exchange duration) × 100% is the initial progress percentage P, and the correction value = sin (initial progress percentage × 0.0628) × correction coefficient, and the correction coefficient can be obtained by looking up a table according to the total request torque of the clutch. The sum of the corrected progress percentages of the offgoing clutch and the oncoming clutch is equal to 100 %. By calculating the corrected progress percentage of one of the clutches, the corrected progress percentage of the other clutch can be directly obtained by subtraction.

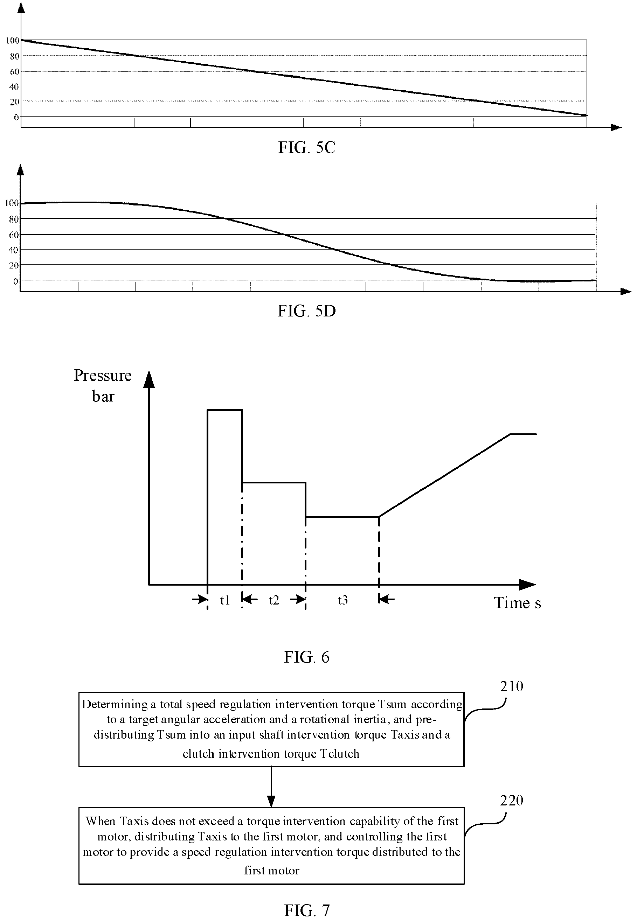

FIG. 5A is a progress percentage curve of an oncoming clutch without correction; FIG. 5B is a progress percentage curve of an oncoming clutch after correction according to an embodiment of the present disclosure; FIG. 5C is a progress percentage curve of an offgoing clutch without correction; FIG. 5D is a progress percentage curve of an offgoing clutch after correction according to an embodiment of the present disclosure. It can be seen that, in the embodiment of the present disclosure, the progress percentage curve after correction incorporates the characteristic of the sine curve, which changes relatively slowly in the beginning phase, changes relatively quickly in the middle phase, and changes relatively slowly in the final phase, that is, the absolute value of the gradient has the characteristics of changing from small to large and then from large to small. In addition to the sine function, other trigonometric functions, as well as continuous functions, discrete functions or combination of functions that can achieve this characteristic can be used in the embodiments of the present disclosure.

In another exemplary embodiment of the present disclosure, the progress percentage can be calculated without correction. After calculating the gear-shifting torque distributed to the offgoing clutch and the gear-shifting torque distributed to the oncoming clutch based on the progress percentage without correction (i.e., the above-mentioned initial progress percentage) and T0, the calculated gear-shifting torque distributed to the offgoing clutch is corrected to obtain Toff, and the calculated gear-shifting torque distributed to the oncoming clutch is corrected to obtain Ton. Toff and Ton are respectively used as request torques of the offgoing clutch and the oncoming clutch to realize torque exchange. This method has equivalent effects as the method of correcting the progress percentage, and both are within the protection scope of the present disclosure.

In the embodiment of the present disclosure, a progress percentage is obtained according to a ratio of a current exchange duration to a torque exchange duration, and then the obtained progress percentage is corrected (such as introducing the characteristic of a sine curve), and then Toff and Ton are obtained through the calculation based on the corrected progress percentage and T0, which enables the absolute values of the gradients of Ton and Toff to first change from small to large within the torque exchange duration, so that the gear-shifting torque distributed to the oncoming clutch changes relatively slowly in the beginning phase, changes relatively quickly in the middle phase, and changes relatively slowly in the final phase, thereby suppressing the bulging phenomenon caused by the change in the response speed of the torque control system and improving the smoothness of the gear-shifting.

In an exemplary embodiment of the present disclosure, the torque exchange duration is obtained according to the following steps:
Step 1: obtaining a corresponding torque exchange duration as follows.

The first way: obtaining a torque exchange duration by looking up a table according to a total request torque of the clutch and a rotation speed of an input shaft corresponding to a target gear. The greater the total request torque of the clutch and the higher the rotation speed of the input shaft corresponding to the target gear, the shorter the duration is, so as to prevent the clutch from overheating. When the driving gear includes a first gear, a second gear and a third gear, and in a case of power-on upshift and power-off upshift, the target gear is the second gear or the third gear; in a case of power-on downshift and power-off downshift, the target gear is the first gear or the second gear. Taking the hybrid architecture shown in FIG. 3 as an example, the shaft connected to the second sun gear S2 of the double-row planetary gear in the figure to realize power input is called the input shaft.

The second way: obtaining a torque exchange duration by looking up a table according to an oil temperature of a hydraulic system, where the torque exchange duration is a maximum torque exchange duration allowed by a current oil temperature.

The third way: obtaining a torque exchange duration by looking up a table according to a temperature of the clutch, where the torque exchange duration is a maximum torque exchange duration allowed by a current temperature of the clutch.

The fourth way: calculating a torque exchange duration according to a maximum energy of a clutch (which is set according to the hardware), where the torque exchange duration = maximum energy value of the clutch/(total request torque of the clutch× slip difference).

The second step: taking a minimum value of all the torque exchange durations obtained as a final torque exchange duration, that is, this torque exchange duration is used to calculate the gear-shifting torque distributed to the offgoing clutch and the gear-shifting torque distributed to the oncoming clutch.

When a gear-shifting torque of the offgoing clutch is equal to a total request torque of the clutch, a torque exchange phase is completed. In order to ensure that the torque of the offgoing clutch is completely unloaded, a delay may be introduced before entering the speed regulation phase.

In an exemplary embodiment of the present disclosure, the method further includes: before the torque exchange phase, setting three phases for performing oil-filling control, using a first oil pressure, a second oil pressure and a third oil pressure to fill the oncoming clutch in the first phase, the second phase and the third phase respectively; where the third oil pressure is equal to a half-engagement point pressure of the oncoming clutch, and the second oil pressure is greater than the third oil pressure and less than the first oil pressure.

In an example of the present embodiment, a difference calculated by subtracting the second oil pressure from the first oil pressure is greater than a difference calculated by subtracting the third oil pressure from the second oil pressure. By setting the first oil pressure higher, the speed of the oil-filling can be increased and the duration required for the oil-filling phase can be shortened.

In an example of the present embodiment, a duration of the first phase is shorter than a sum of a duration of the second phase and a duration of the third phase, so that the oil pressure can reach the half-engagement point pressure of the oncoming clutch as soon as possible.

FIG. 6 is a pressure control curve (i.e., oil-filling curve, Clutch filling strategy diagram) of an oncoming clutch in the present embodiment. As shown in the figure, the oil-filling control process of the present embodiment includes the following three phases in sequence:
a first phase (which can be referred to as a high-pressure oil-filling phase) corresponds to the duration t1 in FIG. 6. As shown in the figure, a relatively high first oil pressure is applied to fill the clutch with oil in the high-pressure oil-filling phase to activate a solenoid valve, which can improve an actual pressure response speed of the clutch. The duration of the high-pressure oil-filling phase is shorter than the other two phases. The oil-filling pressure (first oil pressure) and oil-filling duration used in the high-pressure oil-filling phase are related to an oil temperature, and can be determined according to a current oil temperature, and oil-filling pressures and an oil-filling durations calibrated at different oil temperatures. The filling pressures and filling durations of this phase calibrated at different oil temperatures can be determined according to the test results;
the second phase (which may be referred to as a medium-pressure oil-filling phase) corresponds to the duration t2 in FIG. 6. As shown in the figure, a second oil pressure is applied to fill the clutch with oil in the medium-pressure oil-filling phase, allowing the oil to flow into an oil circuit of the clutch. The second oil pressure is lower than the first oil pressure and slightly higher than the pressure of the half-engagement point (i.e., KP point) of the clutch. The difference calculated by the first oil pressure minus the second oil pressure is greater than the difference of the second oil pressure minus the third oil pressure, so that the oil-filling pressure of the clutch can approach the KP point pressure as soon as possible. The oil-filling pressure and oil-filling duration in the medium-pressure oil-filling phase are related to an oil temperature, and can be determined according to a current oil temperature, and the oil-filling pressures and oil-filling durations of this phase calibrated at different oil temperatures;
the third phase (which can be referred to as a low-pressure oil-filling phase) corresponds to the duration t3 in FIG. 6. As shown in the figure, a third oil pressure is applied to fill the clutch with oil in the low-pressure oil-filling phase. The third oil pressure is equal to the KP point pressure, so that the clutch pressure can reach the KP point to prevent overcharging. The KP point pressures of different samples vary from each other at different ambient temperatures. During the initial oil-filling calibration, a single sample can be tested and calibrated according to the test result. After that, the KP point pressure of the clutch can be determined by self-learning.

In each of the above phases, the transmission control unit or other control units can send a corresponding oil pressure request to the hydraulic control system that supplies oil to the clutch, and the hydraulic control system can generate a corresponding oil pressure.

In the present embodiment, the oil-filling phase is divided into three phases: high-pressure oil-filling, medium-pressure oil-filling and low-pressure oil-filling. The high-pressure oil-filling is performed first to improve the pressure response of the clutch, and then the medium-pressure oil-filling is performed to make the oil-filling pressure of the clutch approach the KP point pressure as soon as possible, and finally the low-pressure oil-filling is performed to make the clutch pressure reach the KP point. The oil-filling process of the present embodiment is rapid and smooth and can prevent overfilling, which is conducive to smooth torque transmission at the beginning of gear-shifting and has no sense of frustration, so that the gear-shifting process can be quickly accomplished.

Oil pressure control is still required in the torque exchange phase and speed regulation phase of the gear-shifting process, as shown in the oil-filling curve after the moment t3 in FIG. 6. By controlling an oil pressure at each phase of the gear-shifting process, the oncoming clutch can be smoothly engaged and pressed tightly until being locked, and the offgoing clutch can be quickly disengaged and released to ensure the power stability of the gear-shifting process.

In the torque exchange phase (Torque Phase), the engagement of the oncoming clutch and the disengagement of the offgoing clutch are carried out simultaneously, a torque of the oncoming clutch gradually increases, and a torque of the offgoing clutch gradually decreases. At the end of the torque exchange phase, the torque has been completely generated by the oncoming clutch. After that, the gear-shifting process enters the speed regulation phase, which can also be referred to as an inertia phase.

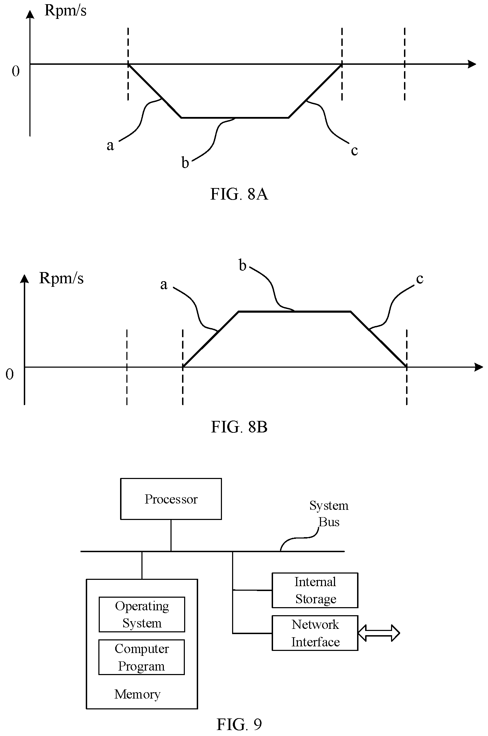

The embodiment of the present disclosure also provides a vehicle controller, as shown in FIG. 9, the vehicle controller includes: a processor and a memory storing a computer program, when the processor executes the computer program, the gear-shifting control method for improving the torque exchange phase as described in any embodiment of the present disclosure can be implemented, and the vehicle controller can also include components such as an internal storage and a network interface. The vehicle controller can be a transmission control module, a whole machine control module, etc., which is not limited in the present disclosure.

An embodiment of the present disclosure further provides a vehicle, including the vehicle controller described in any embodiment of the present disclosure. In an example, the vehicle is a hybrid vehicle, and the offgoing clutch and the oncoming clutch are clutches in a hybrid transmission. However, in other examples, the vehicle may also be a fuel vehicle, an electric vehicle, etc.

An embodiment of the present disclosure further provides a non-transient computer-readable storage medium storing a computer program, when the computer program is executed by a processor, the gear-shifting control method for improving the torque exchange phase as described in any embodiment of the present disclosure can be implemented.

During the gear-shifting speed regulation phase of the gear-shifting process, since the gear-shifting causes a transmission gear ratio to increase or decrease, it is necessary to provide a speed regulation intervention torque (also called inertia torque) to adjust rotation speeds of an engine and a first motor so that a rotation speed of an input shaft of the transmission is equal to a target rotation speed, that is, a product of a rotation speed of an output shaft of the transmission and a transmission gear ratio of a target gear. During the gear-shifting speed regulation phase, it is necessary to fully utilize respective capabilities of the engine, the driving machine, and the clutch to achieve a fast and smooth speed regulation without exceeding capabilities of the devices (such as the first motor, the engine) and without affecting the normal service life of the device (such as the clutch).

To this end, an embodiment of the present disclosure also provides a gear-shifting control method for improving the gear-shifting speed regulation phase. The gear-shifting control method for improving the gear-shifting speed regulation phase in the embodiment of the present disclosure is applied to hybrid vehicles, and is suitable for switching between adjacent gears (such as between a first gear and a second gear, and between the second gear and a third gear) by disengagement of one clutch and engagement of another clutch.

As shown in FIG. 7, an embodiment of the present disclosure provides a gear-shifting control method, applied to a hybrid vehicle including an engine, a first motor and a transmission, where the transmission receives power transmitted by the engine and the first motor through an input shaft. The method includes: in a gear-shifting process between adjacent gears, performing following processing in each control cycle of a gear-shifting speed regulation phase:
Step 210, determining a total speed regulation intervention torque Tsum according to a target angular acceleration and a rotational inertia, and pre-distributing Tsum into an input shaft intervention torque Taxis and a clutch intervention torque Tclutch;
Step 220: when Taxis does not exceed a torque intervention capability of the first motor, distributing Taxis to the first motor, and controlling the first motor to provide a speed regulation intervention torque distributed to the first motor.

The first motor can provide a torque intervention capability by increasing or decreasing torque to achieve speed decrease or speed increase. The torque intervention capability of the first motor has a value range. Taxis not exceeding the torque intervention capability of the first motor means that a value of Taxis is within the value range. A maximum value of the value range is equal to max (first motor request torque without intervention, maximum torque capability of the first motor) - first motor request torque without intervention. Where the first motor request torque without intervention refers to a first motor request torque when the speed regulation intervention torque distributed to the first motor is not included. According to the formulation, when the first motor request torque without intervention is equal to the maximum torque capability of the first motor, the maximum value of the value range is 0, and the speed regulation intervention torque cannot be provided; when the first motor request torque without intervention is less than the maximum torque capability of the first motor, the maximum value is equal to a difference calculated by the maximum torque capability of the first motor minus the first motor request torque without intervention, and a speed regulation intervention torque for increasing torque can be provided. The minimum value of the value range is equal to min (first motor request torque without intervention, minimum torque capability of the first motor) - first motor request torque without intervention. According to the formulation, when the first motor request torque without intervention is equal to the minimum torque capability of the first motor, the minimum value of the value range is 0, and the speed regulation intervention torque cannot be provided; when the first motor request torque without intervention is greater than the minimum torque capability of the first motor, the minimum value of the value range is equal to a difference (negative value) calculated by the minimum torque capability of the first motor minus the first motor request torque without intervention, and a speed regulation intervention torque for reducing torque can be provided.

In an example of the present embodiment, the whole machine control module can add a speed regulation intervention torque distributed to the first motor by the transmission control module and a first motor request torque requested by the engine control module together as a final first motor request torque, and a corresponding actuating mechanism performs torque control on the first motor to provide the speed regulation intervention torque distributed to the first motor.

In the embodiment of the present disclosure, after determining a total speed regulation intervention torque Tsum according to a target angular acceleration and a rotational inertia, Tsum is pre-distributed to an input shaft and a clutch. The speed regulation intervention torque pre-distributed to the input shaft is provided by a driving mechanism (the engine, the first motor), and the speed regulation intervention torque pre-distributed to the clutch is provided by a clutch in a slipping state. When a current gear-shifting type is power-on upshift or power-off downshift, the gear-shifting speed regulation phase is after the torque exchange phase, and the clutch in the slipping state refers to the oncoming clutch; when a current gear-shifting type is power-on downshift or power-off upshift, the gear-shifting speed regulation phase is before the torque exchange phase, and the clutch in the slipping state refers to the offgoing clutch. During the pre-distributing, Tsum can be all pre-distributed into Taxis, or all pre-distributed into Tclutch, or partially pre-distributed to Taxis and partially pre-distributed to Tclutch.

In the gear-shifting control method of the embodiment of the present disclosure, Taxis is distributed to the first motor when Taxis does not exceed a torque intervention capability of the first motor, i.e., the speed regulation intervention torque Taxis pre-distributed to the input shaft is preferentially distributed to the first motor, which can fully utilize the accuracy and rapidity of the motor speed regulation and improve the speed and smoothness of the gear-shifting process.

In an exemplary embodiment of the present disclosure, the method further includes: when Taxis exceeds the torque intervention capability of the first motor but does not exceed a torque intervention capability that can be provided by both the engine and the first motor, a portion of Taxis that does not exceed the torque intervention capability of the first motor is preferentially distributed to the first motor, and the rest of Taxis is distributed to the engine, and the engine is controlled to provide the speed regulation intervention torque distributed to the engine.

Similar to the first motor, the torque intervention capability of the engine has a value range, a maximum value thereof is equal to max (engine request torque without intervention, maximum torque capability of the engine) - engine request torque without intervention, and max (engine request torque without intervention, maximum torque capability of the engine) represents taking a maximum value between the engine request torque without intervention and the maximum torque capability of the engine. Where the engine request torque without intervention refers to an engine request torque when the speed regulation intervention torque distributed to the engine is not included. The minimum value of the value range is equal to min (engine request torque without intervention, minimum torque capability of the engine) - engine request torque without intervention, where the minimum torque capability of the engine is a negative value, and min (engine request torque without intervention, minimum torque capability of the engine) represents taking a minimum value between the engine request torque without intervention and the minimum torque capability of the engine.

The torque intervention capability that can be provided by both the engine and the first motor is a torque intervention capability of the input shaft in the speed regulation phase, which is equal to a sum of a torque intervention capability of the first motor and a torque intervention capability of the engine, that is: a maximum value of the torque intervention capability of the input shaft is equal to a maximum value of the torque intervention capability of the engine plus a maximum value of the torque intervention capability of the first motor; and a minimum value of the torque intervention capability of the input shaft is equal to a minimum value of the torque intervention capability of the engine plus a minimum value of the torque intervention capability of the first motor.

Assuming that a torque intervention capability of the first motor has a value range of [Tpmin, Tpmax], when Taxis exceeds the torque intervention capability of the first motor, a portion of Taxis that does not exceed the torque intervention capability of the first motor is preferentially distributed to the first motor, that is, when Taxis>Tpmax, the portion of Taxis equal to Tpmax is distributed to the first motor. When Taxis<Tpmin, Taxis is distributed to the first motor.

In the present embodiment, the portion of Taxis that does not exceed the torque intervention capability of the first motor is preferentially distributed to the first motor, and the rest of Taxis is distributed to the engine. This can avoid the distributed torque exceeding the capabilities of the engine and the first motor, causing adverse effects on the equipment. At the same time, the excellent speed regulation performance of the motor can contribute to the provision of the speed regulation intervention torque, thereby improving the response speed and accuracy of the speed regulation.

In an exemplary embodiment of the present disclosure, the pre-distributing Tsum to Taxis and Tclutch including:
when a current gear-shifting type is power-on upshift, power-off upshift or power-off downshift, pre-distributing all Tsum into Taxis, where Taxis=Tsum and Tclutch=0 after the pre-distributing;
when a current gear-shifting type is power-on downshift, pre-distributing a portion of Tsum into Taxis and pre-distributing the other portion of Tsum into Tclutch, where Taxis=R1×Tsum and Tclutch=(1-R1)×Tsum after the pre-distributing; where R1 is determined according to a maximum torque capability of the first motor and a first motor request torque without intervention. For example, it can be determined by looking up a table based on a ratio or a difference between the maximum torque capability of the first motor and the first motor request torque without intervention (taking a value at a current moment), or it can be calculated or obtained through a network model.

In the present embodiment, power output requirements for different gear-shifting types are taken into consideration and different pre-distributing methods are adopted. That is, in the case of power-on downshift, the first motor needs to prioritize the driving requirement to output a positive torque. If all the speed regulation intervention torque is distributed to the input shaft and then preferentially distributed to the first motor, the capability of the first motor will be difficult to simultaneously support both driving and speed intervention requirements. Therefore, in the case of power-on downshift, only a portion of the speed regulation intervention torque is pre-distributed to the input shaft, and the other portion is provided by the clutch. In other gear-shifting types, it is not necessary to prioritize the driving requirement, so Tsum can be all pre-distributed into Taxis. According to the different pre-distributing methods, the speed regulation intervention torque can be preferentially distributed to the driving mechanism on the basis of satisfying the power requirement of the gear-shifting process, thereby providing better speed regulation performance.

In an exemplary embodiment of the present disclosure, the gear-shifting speed regulation phase sequentially includes an increasing section, a maximum section and a decreasing section of an angular acceleration value;
the method further includes: at the beginning of the gear-shifting speed regulation phase, determining a gradient value Ginc of the angular acceleration value in the increasing section, a value Amax in the maximum section, and a gradient value Gdec in the decreasing section;
where the target angular acceleration is calculated as follows: in the increasing section, determining the target angular acceleration according to Ginc and a difference between a current moment and a start moment of the increasing section; in the maximum section, adopting Amax as the target angular acceleration; in the decreasing section, determining the target angular acceleration according to Amax, Gdec and a difference between a current moment and a start moment of the decreasing section.

When a current gear-shifting type is power-on upshift or power-off upshift, an actual rotation speed of the input shaft is higher than a target rotation speed, and a speed regulation intervention torque is required for deceleration. At this time, the angular acceleration of the input shaft is a negative value, and the gradient control method thereof is shown in FIG. 8A. In the figure, a is marked as the increasing section of the angular acceleration value (the angular acceleration value refers to an absolute value of the angular acceleration), and an absolute value of a slope of the increasing section of the angular acceleration is the gradient value Ginc of the angular acceleration in the increasing section; b is marked as the value Amax of the angular acceleration value in the maximum section; c is marked as the decreasing section of the angular acceleration value, and an absolute value of a slope of the decreasing section of the angular acceleration is the gradient value Gdec of the angular acceleration in the decreasing section. When a current gear-shifting type is power-on downshift or power-off downshift, an actual rotation speed of the input shaft is lower than a target rotation speed, and the speed regulation intervention torque is required for acceleration. At this time, the angular acceleration of the input shaft is a positive value, and its gradient control method is shown in FIG. 8B. The signs a, b, and c in FIG. 8B are the increasing section, the maximum section, and the decreasing section of the angular acceleration value, respectively, which are similar to those in FIG. 8A and will not be repeated herein.

In the present embodiment, after Ginc, Amax and Gdec are determined, the angular acceleration value at each moment of the gear-shifting speed regulation phase can be calculated according to a current moment and start moments of the increasing section and the decreasing section. This three-phase speed regulation method facilitates the control of the gear-shifting speed regulation phase.

In an exemplary embodiment of the present disclosure, Ginc is determined according to one or more of following methods:
when a current gear-shifting type is power-on upshift, determining a minimum value between Gonu and Gtem as Ginc, where Gonu is determined according to a request torque Treq0 of a clutch in a slipping state at a start moment of a speed regulation, and Gonu is positively correlated with Treq0;
when a current gear-shifting type is power-on downshift, determining a minimum value between Gond and Gtem as Ginc, where Gond is determined according to a current driving mode;
when a current gear-shifting type is power-off downshift, determining a minimum value between Gofd and Gtem as Ginc, where Gofd is determined according to a current gas pedal stepping amount and a maximum power of the first motor, and Gofd is positively correlated with a gas pedal stepping amount and the maximum power of the first motor;
when a current gear-shifting type is power-off upshift, determining a minimum value between Gofu and Gtem as Ginc, where Gofu is determined according to a current driving mode;
where Gtem is a speed regulation gradient value determined according to a current temperature of the clutch, indicating a maximum gradient value that is allowable; if an angular acceleration is greater than this value, the angular acceleration changes too quickly, which will cause overheating of the clutch.

When the above-mentioned gradient value Gofd is determined according to one or more parameters, it can be obtained by looking up a table according to the one or more parameters (the table can be formulated according to test data); or, it can be calculated according to the one or more parameters; or, the one or more parameters are input into a trained model (such as a neural network model, etc.) and the gradient value Gofd is obtained from the output of the model, which is not limited in the present disclosure. When other gradient values, speed regulation durations, etc. are determined according to one or more parameters, these methods can also be used, which will not be repeated herein.

In the present embodiment, for different gear-shifting types, different methods are adopted to determine the gradient value Ginc of the angular acceleration value in the increasing section, which can fully optimize the speed regulation performance according to the characteristics of different gear-shifting types. For example, when a current gear-shifting type is power-off downshift, the gas pedal stepping amount and a maximum power of the first motor are considered when determining Ginc, where the gas pedal stepping amount represents the driver's intention. Since Gofd is positively correlated with the gas pedal stepping amount, the larger the gas pedal stepping amount, the larger Gofd, which makes the speed regulation faster, so that the gear-shifting process is completed quickly to meet the driver's intention. The maximum power of the first motor represents a capability of the first motor. The greater the capability of the first motor, the faster the speed regulation, so that the capability of the first motor can be fully utilized to speed up the speed regulation process.

In other embodiments, for some gear-shifting types in the four gear-shifting types, Ginc may be determined in the same way as for the corresponding gear-shifting type in the present embodiment, while for the other gear-shifting types, Ginc may be determined in a manner different from that in the present embodiment.

In an exemplary embodiment of the present disclosure, the driving mode includes one or more of the following: dynamic mode, normal mode and economic mode. It can be understood that the current driving mode is one of the one or more of the above modes.

In an exemplary embodiment of the present disclosure, Amax is determined as follows: determining a maximum value of Ac and Aclu as Amax, where Ac is determined according to a rotation speed difference between a target rotation speed and an actual rotation speed of the input shaft at a start moment of a speed regulation divided by a target speed regulation duration Tv, and Aclu is an angular acceleration value determined according to a current temperature of the clutch in a slipping state.

In the present embodiment, the target speed regulation duration Tv is determined according to one or more of following methods:
when a current gear-shifting type is power-on upshift, determining a minimum value between Tonu and Tclu as Tv, where Tonu is determined according to at least one of a current driving mode, the rotation speed difference, and a torque of the input shaft without intervention, Tonu is positively correlated with the rotation speed difference and negatively correlated with the torque of the input shaft without intervention;
when a current gear-shifting type is power-on downshift, determining a minimum value between Tond and Tclu as Tv, where Tond is obtained by multiplying a duration by a first coefficient, the duration is determined according to at least one of a current driving mode, the rotation speed difference, and a torque of the input shaft without intervention, the first coefficient is determined according to a ratio of a maximum torque to an actual torque of the first motor, and Tond is positively correlated with the rotation speed difference and negatively correlated with the torque of the input shaft without intervention and the ratio;
when a current gear-shifting type is power-off upshift, determining a minimum value between Tofd and Tclu as Tv, where Tofd is determined according to at least one of a current driving mode, the rotation speed difference, and a torque of the input shaft without intervention, Tofd is positively correlated with the rotation speed difference and negatively correlated with the torque of the input shaft without intervention;
when a current gear-shifting type is power-off downshift, determining a minimum value between Tofu and Tclu as Tv, where Tofu is obtained by dividing a duration by a second coefficient, the duration is determined according to at least one of a current driving mode, the rotation speed difference and a torque of the input shaft without intervention, the second coefficient is determined according to a current gas pedal stepping amount and a maximum power of the first motor, Tofu is positively correlated with the rotation speed difference and negatively correlated with the torque of the input shaft without intervention, a gas pedal stepping amount and the maximum power of the first motor;
where Tclu is a maximum speed regulation duration determined according to a maximum energy value of the clutch. For example, the maximum speed regulation duration = the maximum energy value of the clutch/(the request torque of the clutch *the slip difference of the clutch), where values at the start moment of speed regulation can be taken as the request torque and the slip difference of the clutch. The maximum energy value of the clutch is set according to the hardware.

The positive correlation described in the embodiments of the present disclosure, such as the positive correlation between Tofu and the rotation speed difference, does not require that Tofu must increase when the rotation speed difference increases (Tofu may also remain unchanged) when other parameters related to Tofu remain unchanged. When the rotation speed difference causes Tofu to change, a larger Tofu corresponds to a larger rotation speed difference, and the two can be considered to be positively correlated. The same is true for the positive correlation between other parameters.

In the present embodiment, for different gear-shifting types, different methods are adopted to determine the target speed regulation duration Tv, which can fully optimize the speed regulation performance according to the characteristics of different gear-shifting types. For example, in the case of power-on downshift, a ratio of the maximum torque and the actual torque of the first motor is considered. This ratio represents the capability of the first motor. Therefore, the capability of the first motor should prioritize the driving requirement in the case of power-on downshift. Therefore, the capability of the first motor is taken into consideration to calculate Tond here, which can prevent the speed regulation from affecting the driving, e.g., avoid vehicle speed setbacks and other phenomenons during gear-shifting. For another example, when a current gear-shifting type is power-off downshift, the gas pedal stepping amount and the maximum power of the first motor are taken into consideration when determining Tv. As mentioned above, the gas pedal stepping amount represents the driver's intention, and the maximum power of the first motor represents the capability of the first motor. When performing the calculation, Tofu is negatively correlated with the gas pedal stepping amount and the maximum power of the first motor, which can meet the driver's intention and make full use of the capability of the first motor to speed up the speed regulation process.

In other embodiments, for some gear-shifting types in the four gear-shifting types, Tv may be determined in the same manner as for the corresponding gear-shifting type in the present embodiment, while for the other gear-shifting types, Tv may be determined in a manner different from that in the present embodiment.

In an exemplary embodiment of the present disclosure, the gradient value Gdec of the decreasing section is determined as follows: determining a minimum value between Gcon and Gtem as Gdec; where Gcon is determined according to a rotation speed difference between a target rotation speed and an actual rotation speed of the input shaft at a start moment of a speed regulation, and a torque of the input shaft without intervention; and Gtem is a speed regulation gradient value determined according to a current temperature of a clutch in a slipping state.

In the above embodiment, relevant states of the clutch such as the oil temperature and the request torque of the clutch are taken into consideration when calculating the gradient value and the speed regulation duration, so as to avoid the overheating of the clutch and damage to the clutch.

In an exemplary embodiment of the present disclosure, the method further includes:
when a current gear-shifting type is power-on upshift or power-off upshift and when a speed regulation duration times out or Vin<Vout×I-Offset1 is satisfied, determining that the speed regulation is completed;
when a current gear-shifting type is power-on downshift or power-off downshift and when a speed regulation duration times out or Vin>Vout×I+Offset2 is satisfied, determining that the speed regulation is completed;
where Vin is a rotation speed of the input shaft, Vout is a rotation speed of an output shaft of the transmission, I is a transmission gear ratio of a target gear; and Offset1 and Offset2 are positive values which are set offsets.

In the present embodiment, when a current gear-shifting type is power-on upshift or power-off upshift, speed decrease is needed in the gear-shifting speed regulation phase, so when a rotation speed of the input shaft is lower than a target rotation speed and a difference therebetween is the set offset Offset1, the speed regulation can be determined to be completed. When a current gear-shifting type is power-on downshift or power-off downshift, speed increase is needed in the gear-shifting speed regulation phase, so when a rotation speed of the input shaft is higher than a target rotation speed and a difference therebetween is the set offset Offset2, the speed regulation can be determined to be completed.

In the present embodiment, a speed regulation durationout means that the speed regulation duration has reached a maximum allowable speed regulation duration, and the maximum allowable speed regulation duration can be determined according to a maximum energy value of the clutch in a slipping state, and a request torque and a slip difference of the clutch at a start moment of a speed regulation, the maximum allowable speed regulation duration is positively correlated with the maximum energy value of the clutch in the slipping state and negatively correlated with the request torque and the slip difference of the clutch at the start moment of the speed regulation. For example, the maximum allowable speed regulation duration = the maximum energy value of the clutch in the slipping state / (the request torque of the clutch * the slip difference of the clutch), where the request torque and the slip difference can be the values at the start moment of speed regulation.

In an exemplary implementation of the present disclosure, the method further includes: in the gear-shifting speed regulation phase, determining the request torque of the clutch in the slipping state as follows:
calculating a sum of a clutch intervention torque Tclutch distributed to the clutch, a feedforward torque of the clutch and I-term (i.e., integral term in proportional-integral-derivative regulation) regulation torque of the clutch to obtain an initial request torque of the clutch;
calculating a product of an efficiency and the initial request torque of the clutch to obtain the request torque of the clutch; where the efficiency is determined according to a current gear-shifting type, a current slip difference of the clutch and a torque of the input shaft without intervention.

In an exemplary implementation of the present disclosure, the method further includes:
during a mode-switching process, when a gear-shifting request is received, suspending the mode-switching process and executing the gear-shifting process, and continuing the mode-switching process after the gear-shifting process is completed;
during the gear-shifting speed regulation phase or a torque exchange phase of the gear-shifting process, when a mode-switching request is received, deferring execution of the mode-switching process, and executing the mode-switching process after the gear-shifting process is completed.

The above-mentioned mode-switching process may be switching between a parallel mode, a series mode and a pure electric mode of a hybrid vehicle. In the present embodiment, between mode-switching and gear-shifting, the gear-shifting process is prioritized because a timely and fast response to gear-shifting is more important for the driving experience and can improve the driving experience.

An embodiment of the present disclosure also provides a gear-shifting control method, which adopts gradient control (gradient control) in the gear-shifting speed regulation phase. The entire gear-shifting speed regulation phase is divided into three sections according to the change of the angular acceleration value, namely, an increasing section, a maximum section and a decreasing section.

When a current gear-shifting type is power-on upshift or power-off upshift, a schematic diagram of gradient control of angular acceleration is shown in FIG. 8A; when a current gear-shifting type is power-on downshift or power-off downshift, a schematic diagram of gradient control of angular acceleration is shown in FIG. 8B.

In the present embodiment, in order to determine a target angular acceleration at each moment in the gear-shifting speed regulation phase, it is necessary to determine a gradient value of the increasing section to calculate a target angular acceleration of the increasing section; determine an angular acceleration of the maximum section, the angular acceleration of the maximum section can be directly used as a target angular acceleration of the maximum section; and determine a gradient of the decreasing section to calculate a target angular acceleration of the decreasing section.

The gradient of the increasing section (increase rate) is calculated according to different gear-shifting types as follows:
when a gear-shifting type is power-on upshift (Power on up), initializing an increase rate as 0 first, and then determining an increase rate by looking up a table according to a request torque of the clutch; where the larger the request torque of the clutch, the larger the increase rate, which means a target speed regulation rate is larger; then taking a minimum value between the increase rate and an increase rate which is determined by looking up a table according to a temperature of the clutch as a final increase rate, so as to prevent the clutch from overheating. The clutches in the present embodiment all refer to clutches in a slipping state;
when a gear-shifting type is power-on downshift (Power on down), initializing an increase rate as 0 first, and then determining an increase rate by looking up a table according to a driving mode requested by a driver (such as dynamic mode, normal mode, economic mode, etc.); then taking a minimum value between the increase rate and the increase rate which is determined by looking up a table according to a temperature of the clutch as a final increase rate, so as to prevent the clutch from overheating;
when a gear-shifting type is power-off downshift (Power off down), initializing an increase rate as 0 first, and then determining an increase rate by looking up a table according to a gas pedal stepping amount and a maximum power of the first motor, where the greater the maximum power of the first motor, the greater the increase rate and the faster the speed regulation rate; the smaller the gas pedal stepping amount, the smaller the increase rate and the smaller the target speed regulation rate; then taking a minimum value between the increase rate and an increase rate which is determined by looking up a table according to a temperature of the clutch as a final increase rate, so as to prevent the clutch from overheating. In an example, a relationship between a gas pedal stepping amount and a maximum power of the first motor and an increase rate is shown in the following table:
x: gas pedal stepping amount, y: maximum power of the first motor

| y/x | 0 | 30 | 50 | 80 |
|---|---|---|---|---|
| 0 | 3500 | 7000 | 10000 | 70000 |
| 50 | 7000 | 14000 | 20000 | 70000 |
| 80 | 14000 | 21000 | 42000 | 70000 |

When a gear-shifting type is power-off upshift (Power off up), initializing an increase rate as 0 first, and then determining an increase rate by looking up a table according to a driving mode requested by a driver; then, taking a minimum value between the increase rate and an increase rate which is determined by looking up a table according to a temperature of the clutch as a final increase rate, so as to prevent the clutch from overheating.

In the present embodiment, an angular acceleration of the maximum section (max rate) is calculated by the following method:
Step 1: when a gear-shifting request is received, calculating a target rotation speed of the input shaft by multiplying a rotation speed of an output shaft of the transmission by a gear ratio of a target gear; subtracting a rotation speed of the input shaft at the moment of receiving the gear-shifting request (i.e., an actual input shaft rotation speed) from the target rotation speed to obtain a rotation speed difference of the input shaft;
Step 2: calculating a target speed regulation duration according to different gear-shifting types:
when a gear-shifting type is Power on up, depending on different driving modes (dynamic mode, normal mode and economic mode, etc.), determining a speed regulation duration by looking up a table according to a rotation speed difference of the input shaft and an input shaft torque without intervention; where the larger the input shaft torque without intervention (i.e., an input shaft torque when a speed regulation intervention torque is not included), the smaller the speed regulation duration; the smaller the rotation speed difference, the smaller the speed regulation duration. Then taking a minimum value from the speed regulation duration and a maximum speed regulation duration calculated according to a maximum energy value of the clutch as a target speed regulation duration, so as to prevent the clutch from overheating; where the maximum energy value of the clutch is set according to the hardware, and the maximum speed regulation duration = maximum energy value of the clutch/( request torque of the clutch * slip difference of the clutch); where "*" represents multiplication operation, and "/" represents division operation, the request torque of the clutch and the slip difference of the clutch in the formula can be the request torque of the clutch and the slip difference of the clutch at a start moment of speed regulation;
when a gear-shifting type is Power on down, depending on different driving modes, determining a speed regulation duration by looking up a table according to a rotation speed difference of the input shaft and an input shaft torque without intervention, and then taking a minimum value from a speed regulation duration correction value (which is obtained by multiplying the speed regulation duration by a first coefficient) and a maximum speed regulation duration (which is calculated according to a maximum energy value of the clutch) as a target speed regulation duration, so as to prevent the clutch from overheating; where the first coefficient is determined by looking up a table based on a ratio of a maximum torque of the first motor to an actual torque of the first motor; the larger the ratio, the stronger the capability of the first motor, the smaller the first coefficient, and the smaller the speed regulation duration correction value. In an example, the relationship between the ratio and the first coefficient is shown in the following table:

| | | | | | |
|---|---|---|---|---|---|
| Ratio | 10 | 5 | 2 | 1 | 0.5 |
| First coefficient | 0.5 | 0.6 | 0.9 | 1 | 1.2 |

when a gear-shifting type is Power off up, depending on different driving modes, obtaining a speed regulation duration by looking up a table according to a rotation speed difference of the input shaft and an input shaft torque without intervention; then taking a minimum value between the speed regulation duration and a maximum speed regulation duration calculated according to a maximum energy value of the clutch as a target speed regulation duration, so as to prevent the clutch from overheating;
when a gear-shifting type is Power off down, depending on different driving modes, obtaining a speed regulation duration by looking up a table according to a rotation speed difference of the input shaft and an input shaft torque without intervention; then taking a minimum value from a speed regulation duration correction value (which is obtained by dividing the speed regulation duration by a second coefficient) and a maximum speed regulation duration (which is calculated according to a maximum energy value of the clutch) as a target speed regulation duration, so as to prevent the clutch from overheating; where the second coefficient is determined by looking up a table based on a gas pedal stepping amount and a maximum power of the first motor; the larger the gas pedal stepping amount, the larger the second coefficient, the smaller the speed regulation duration correction value, and the faster the speed regulation (when taking the speed regulation duration correction value as the target speed regulation duration); the larger the maximum power of the first motor, the larger the second coefficient, the smaller the speed regulation duration correction value, and the faster the speed regulation. In an example, the relationship between the maximum power of the first motor and the gas pedal stepping amount and the second coefficient is shown in the following table:
x: maximum power of the first motor, y: gas pedal stepping amount

| y/x | 0 | 50 | 80 |
|---|---|---|---|
| 0 | 1 | 2 | 3 |
| 50 | 1.5 | 2 | 3.5 |
| 80 | 2 | 3 | 4 |

Step 3: after the target speed regulation duration is calculated, obtaining a max rate according to a formula: a maximum value of angular acceleration (max rate) = rotation speed difference of the input shaft/target speed regulation duration; then taking a maximum value from the max rate and a max rate determined by looking up a table according to a temperature of the clutch, so as to prevent the clutch from overheating. In an example, a relationship between the temperature of the clutch and the max rate is as follows:

| Temperature of a clutch | 150 | 200 | 280 | 380 |
|---|---|---|---|---|
| Max rate | 12000 | 12000 | 36000 | 100000 |

Step 4: calculating a gradient value (decrease rate) of the decreasing section of the angular acceleration value:
determining a decrease rate by looking up a table according to a rotation speed difference between a target rotation speed and an actual rotation speed of the input shaft at a start moment of speed regulation, and an input shaft torque without intervention; where the larger the rotation speed difference, the larger the decrease rate; where the larger the input shaft torque without intervention, the larger the decrease rate; then taking a minimum value from the decrease rate and a decrease rate (a maximum allowable gradient value) determined by looking up a table according to a temperature of the clutch, so as to prevent the clutch from overheating; where the higher the temperature of the clutch, the larger the determined decrease rate;

Step 5, calculating a speed regulation intervention torque. In the gear-shifting speed regulation phase, the speed regulation intervention torque needs to be calculated once in each processing cycle. The duration of the processing cycle can be a set fixed value, which is not limited in the present disclosure. After calculating a gradient value of the angular acceleration value in the increasing section, a value in the maximum section, and a gradient value in the decreasing section, an angular acceleration value at each moment in the gear-shifting speed regulation phase can be calculated, and a sign of the angular acceleration can be determined according to the gear-shifting type, so that the angular acceleration at that moment can be obtained. By multiplying the angular acceleration by a rotational inertia of the input shaft, the speed regulation intervention torque at that moment can be obtained.

In the present embodiment, the speed regulation intervention torque is distributed as follows:
when a current gear-shifting type is power-on downshift (power on down), according to a ratio of a maximum torque capability of the first motor (a maximum torque that can be provided) to a current actual torque of an engine, pre-distributing a portion of the speed regulation intervention torque into a speed regulation intervention torque of the input shaft, and pre-distributing the rest into a speed regulation intervention torque of the clutch; when a current gear-shifting type is other gear-shifting types, pre-distributing all the speed regulation intervention torque into the speed regulation intervention torque of the input shaft.

Where the speed regulation intervention torque pre-distributed to the input shaft is distributed as follows.

If the speed regulation intervention torque of the input shaft exceeds a torque intervention capability of the input shaft, distributing the exceeding portion to the clutch for speed intervention; at this time, the request torque of the clutch = the speed regulation intervention torque of the clutch + feedforward torque of the clutch (equal to input shaft torque) + I-term regulation torque; where I-term regulation torque is obtained by accumulating a product of a difference of the rotation speed change rate of the input shaft and I-term regulation coefficient; where the difference of the rotation speed change rate of the input shaft is equal to a target rotation speed change rate of the input shaft minus an actual rotation speed change rate of the input shaft, and the I-term regulation coefficient can be determined by looking up a table according to a mode, a gear-shifting type, a gear, and the difference, etc.; where the mode refers to: a parallel mode, a series mode or a pure electric mode of a hybrid vehicle.

If the speed regulation intervention torque of the input shaft does not exceed a torque intervention capability of the input shaft and the speed regulation intervention torque of the input shaft is less than a torque intervention capability of the first motor, preferentially distributing the speed regulation intervention torque of the input shaft to the first motor to increase or decrease the torque due to the fast response and high precision of the motor; at this time, a total request torque of the first motor is equal to a sum of the speed regulation intervention torque distributed to the first motor and the first motor request torque without intervention, and the first motor request torque without intervention is, e.g., a first motor torque requested by the engine control module (ECM).

If the speed regulation intervention torque of the input shaft does not exceed the torque intervention capability of the input shaft and the speed regulation intervention torque of the input shaft exceeds the torque intervention capability of the first motor, a portion of the speed regulation intervention torque of the input shaft exceeding the torque intervention capability of the first motor is distributed to the engine. At this time, a total engine request torque is equal to the speed regulation intervention torque distributed to the engine plus an engine torque requested by the ECM.

In the present embodiment, the completion condition for speed regulation can be determined as follows.

When a current gear-shifting type is upshift (including power-on upshift and power-off upshift), before the speed regulation durations out, if the condition is met: the rotation speed of the input shaft is less than the target rotation speed of the input shaft minus a first offset, the speed regulation is completed.

When a current gear-shifting type is downshift (including power-on downshift and power-off downshift), before the speed regulation durations out, if the condition is met: the rotation speed of the input shaft is greater than the target rotation speed of the input shaft plus a second offset, the speed regulation is completed.

In order to prevent the clutch from overheating, whether the speed regulation has timed out can be determined as follows: the longest speed regulation duration is calculated according to the maximum energy value of the clutch set by the hardware = maximum energy value of the clutch/(request torque of the clutch * slip difference of the clutch). If the above conditions are not met after the longest speed regulation duration, it is considered that the speed regulation has timed out, and the speed regulation is completed at this time.

After the speed regulation is completed, the clutch is locked.

In the present embodiment, during the gear-shifting speed regulation phase, efficiency compensation can be performed when calculating the clutch torque, and an efficiency value is obtained by looking up a table according to a gear-shifting type, a slip difference of the clutch and an input shaft torque. When a current gear-shifting type is power-on upshift or power-on downshift, a calculated request torque of the clutch is multiplied by the efficiency value to obtain a final request torque of the clutch. When a current gear-shifting type is power-on downshift or power-off downshift, a calculated request torque of the clutch is divided by the efficiency value to obtain a final request torque of the clutch.

In the present embodiment, when gear-shifting and mode-switching occur simultaneously, the gear-shifting is prioritized. If a mode-switching request is received during a gear-shifting exchange phase, the mode-switching is not performed, and the mode-switching is performed after the gear-shifting is completed. If a mode-switching request is received during a gear-shifting speed regulation process, the mode-switching is not performed, and the mode-switching is performed after the gear-shifting is completed. During a speed regulation process of mode-switching, if a gear-shifting request is received, the gear-shifting process is processed, and the speed regulation process of the mode-switching is continued after the gear-shifting process is completed. During an engagement process of the fourth clutch C0 of mode-switching, if a gear-shifting request is received, the gear-shifting process is carried out, and the engagement of C0 is continued after the gear-shifting process is completed.

An embodiment of the present disclosure also provides a vehicle controller, applied to a hybrid vehicle, as shown in FIG. 9, the vehicle controller includes: a processor and a memory storing a computer program, where when the processor executes the computer program, the gear-shifting control method for improving the gear-shifting speed regulation phase as described in any embodiment of the present disclosure can be implemented, and the vehicle controller may also include components such as an internal storage and a network interface. The vehicle controller may be a transmission control module, a whole machine control module, etc., which is not limited in the present disclosure.

An embodiment of the present disclosure further provides a hybrid vehicle, including the vehicle controller applied to the hybrid vehicle described in the above embodiment.

An embodiment of the present disclosure further provides a non-transient computer-readable storage medium, where the computer-readable storage medium stores a computer program, and when the computer program is executed by a processor, the gear-shifting control method for improving the gear-shifting speed regulation phase described in any embodiment of the present disclosure can be implemented.

The processor of the above-mentioned embodiment of the present disclosure may be a general-purpose processor, including a central processing unit (CPU), a network processor (Network Processor, or NP for short), a microprocessor, etc., or other conventional processors, etc.; the processor may also be a digital signal processor (DSP), an application-specific integrated circuit (ASIC), a field programmable gate array (FPGA), a discrete logic or other programmable logic device, a discrete gate or a transistor logic device, a discrete hardware component, or other equivalent integrated or discrete logic circuits, or a combination of the above devices. That is, the processor of the above-mentioned embodiment may be any processing device or device combination for implementing the various methods, steps and logic block diagrams disclosed in the embodiments of the present disclosure. If the embodiments of the present disclosure are partially implemented in software, the instructions for the software may be stored in a suitable non-transient computer-readable storage medium, and one or more processors may be used to execute the instructions in hardware to implement the methods of the embodiments of the present disclosure. The term "processor" used herein may refer to the above-mentioned structure or any other structure suitable for implementing the technology described herein.

In one or more of the above exemplary embodiments, the functions described may be implemented in hardware, software, firmware, or any combination thereof. If implemented in software, the functions may be stored as one or more instructions or codes on a computer-readable medium or transmitted via a computer-readable medium, and executed by a hardware-based processing unit. A computer-readable medium may include a computer-readable storage medium corresponding to a tangible medium such as a data storage medium, or a communication medium that facilitates a computer program, such as any medium transmitted from one place to another according to a communication protocol. In this way, a computer-readable medium may generally correspond to a non-temporary tangible computer-readable storage medium or a communication medium such as a signal or carrier wave. A data storage medium may be any available medium that can be accessed by one or more computers or one or more processors to retrieve instructions, codes, and/or data structures for implementing the technology described in the present disclosure. A computer program product may include a computer-readable medium.

For example, without limitation, such computer-readable storage medium may include RAM (Random Access Memory), ROM (Read-Only Memory), EEPROM (Electrically Erasable Programmable Read-Only Memory), CD-ROM (Compact Disc Read-Only Memory) or other optical disk storage apparatus, magnetic disk storage apparatus or other magnetic storage apparatus, flash memory, or any other medium that can be used to store the desired program code in the form of instructions or data structures and can be accessed by a computer. Moreover, for example, if instructions are transmitted from a website, server or other remote source through any connection that may be referred to as a computer-readable medium such as coaxial cable, fiber optic cable, twisted pair, digital subscriber line (DSL), or wireless technologies such as infrared, radio and microwave, then the coaxial cable, fiber optic cable, twisted pair, DSL, or wireless technologies such as infrared, radio and microwave are included in the definition of the medium. However, it should be understood that computer-readable storage medium and data storage medium do not include connections, carrier waves, signals, or other transient (transient) medium, but are directed to non-transient tangible storage medium. As used herein, disks and optical disks include compact disks (CDs), laser disks, optical disks, digital versatile disks (DVDs), floppy disks, or Blu-ray disks, etc., where disks typically reproduce data magnetically, while optical disks use lasers to reproduce data optically. The combination of the above should also be included in the scope of computer-readable media. Although the embodiments disclosed in the present disclosure are as above, the contents described are only embodiments adopted to facilitate understanding of the present disclosure and are not intended to limit the present disclosure. Those skilled in the art can make any modifications and changes in the form and details of implementation without departing from the scope of the present disclosure as defined by the attached claims.

## Claims

1. A gear-shifting control method, applied to a hybrid vehicle comprising an engine, a first motor, a clutch, and a transmission, the transmission receiving power transmitted by the engine and the first motor through an input shaft, **characterized in that**: the method comprises: in a gear-shifting process between adjacent gears, performing following processing in each control cycle of a gear-shifting speed regulation phase:
(210) determining a total speed regulation intervention torque Tsum according to a target angular acceleration and a rotational inertia, and pre-distributing Tsum into an input shaft intervention torque Taxis and a clutch intervention torque Tclutch applied by the clutch; and
determining whether Taxis exceeds a torque intervention capability of the first motor, and
when determining that Taxis does not exceed the torque intervention capability of the first motor, distributing Taxis to the first motor, and controlling the first motor to provide a speed regulation intervention torque distributed to the first motor; when determining that Taxis exceeds the torque intervention capability of the first motor but does not exceed a torque intervention capability that can be provided by both the engine and the first motor, on the basis of not exceeding the torque intervention capability of the first motor, distributing Taxis to the first motor first, then distributing the rest of Taxis to the engine, and controlling the engine to provide a speed regulation intervention torque distributed to the engine;
wherein the pre-distributing Tsum into Taxis and Tclutch comprises:
when a current gear-shifting type is power-on upshift, power-off upshift or power-off downshift, pre-distributing all Tsum into Taxis, wherein Taxis=Tsum and Tclutch=0 after the pre-distributing; when a current gear-shifting type is power-on downshift, pre-distributing a portion of Tsum into Taxis and pre-distributing the other portion of Tsum into Tclutch, wherein Taxis=R1×Tsum and Tclutch=(1-R1)×Tsum after the pre-distributing; wherein R1 is determined according to a maximum torque capability of the first motor and a first motor request torque without intervention.

2. The method according to claim 1, wherein the method further comprises:
when Taxis exceeds the torque intervention capability of the first motor but does not exceed the torque intervention capability that can be provided by both the engine and the first motor, distributing a portion of Taxis that does not exceed the torque intervention capability of the first motor to the first motor first, then distributing the rest of Taxis to the engine, and controlling the engine to provide the speed regulation intervention torque distributed to the engine.

3. The method according to claim 1, wherein the gear-shifting speed regulation phase comprises an increasing section, a maximum section and a decreasing section of an angular acceleration value in sequence;
the method further comprises: at the beginning of the gear-shifting speed regulation phase, determining a gradient value Ginc of the angular acceleration value in the increasing section, a value Amax in the maximum section, and a gradient value Gdec in the decreasing section;
wherein the target angular acceleration is calculated as follows: in the increasing section, determining the target angular acceleration according to Ginc and a difference between a current moment and a start moment of the increasing section; in the maximum section, determining Amax as the target angular acceleration; in the decreasing section, determining the target angular acceleration according to Amax, Gdec and a difference between a current moment and a start moment of the decreasing section.

4. The method according to claim 3, wherein Ginc is determined according to one or more of following methods:
when a current gear-shifting type is power-on upshift, determining a minimum value between Gonu and Gtem as Ginc, wherein Gonu is determined according to a request torque Treq0 of the clutch in a slipping state at a start moment of a speed regulation, and Gonu is positively correlated with Treq0;
when a current gear-shifting type is power-on downshift, determining a minimum value between Gond and Gtem as Ginc, wherein Gond is determined according to a current driving mode;
when a current gear-shifting type is power-off upshift, determining a minimum value between Gofu and Gtem as Ginc, wherein Gofu is determined according to a current driving mode;
when a current gear-shifting type is power-off downshift, determining a minimum value between Gofd and Gtem as Ginc, wherein Gofd is determined according to a current gas pedal stepping amount and a maximum power of the first motor, and Gofd is positively correlated with a gas pedal stepping amount and the maximum power of the first motor;
wherein Gtem is a speed regulation gradient value determined according to a current temperature of the clutch.

5. The method according to claim 3, wherein Amax is determined as follows:
determining a maximum value of Ac and Aclu as Amax, wherein Ac is determined according to a rotation speed difference between a target rotation speed and an actual rotation speed of the input shaft at a start moment of a speed regulation divided by a target speed regulation duration Tv, and Aclu is an angular acceleration value determined according to a current temperature of the clutch in a slipping state.

6. The method according to claim 5, wherein the target speed regulation duration Tv is determined according to one or more of following methods:
when a current gear-shifting type is power-on upshift, determining a minimum value between Tonu and Tclu as Tv, wherein Tonu is determined according to at least one of a current driving mode, the rotation speed difference, and a torque of the input shaft without intervention, Tonu is positively correlated with the rotation speed difference and negatively correlated with the torque of the input shaft without intervention;
when a current gear-shifting type is power-on downshift, determining a minimum value between Tond and Tclu as Tv, wherein Tond is obtained by multiplying a duration by a first coefficient, the duration is determined according to at least one of a current driving mode, the rotation speed difference, and a torque of the input shaft without intervention, the first coefficient is determined according to a ratio of a maximum torque to an actual torque of the first motor, and Tond is positively correlated with the rotation speed difference and negatively correlated with the torque of the input shaft without intervention and the ratio;
when a current gear-shifting type is power-off upshift, determining a minimum value between Tofd and Tclu as Tv, wherein Tofd is determined according to at least one of a current driving mode, the rotation speed difference, and a torque of the input shaft without intervention, Tofd is positively correlated with the rotation speed difference and negatively correlated with the torque of the input shaft without intervention;
when a current gear-shifting type is power-off downshift, determining a minimum value between Tofu and Tclu as Tv, wherein Tofu is obtained by dividing a duration by a second coefficient, the duration is determined according to at least one of a current driving mode, the rotation speed difference and a torque of the input shaft without intervention, the second coefficient is determined according to a current gas pedal stepping amount and a maximum power of the first motor, Tofu is positively correlated with the rotation speed difference and negatively correlated with the torque of the input shaft without intervention, a gas pedal stepping amount and the maximum power of the first motor;
wherein Tclu is a maximum speed regulation duration determined according to a maximum energy value of the clutch.

7. The method according to claim 3, wherein Gdec is determined as follows:
determining a minimum value between Gcon and Gtem as Gdec, wherein Gcon is determined according to a rotation speed difference between a target rotation speed and an actual rotation speed of the input shaft at a start moment of a speed regulation, and a torque of the input shaft without intervention; and Gtem is a speed regulation gradient value determined according to a current temperature of the clutch in a slipping state.

8. The method according to claim 1, wherein the method further comprises:
when a current gear-shifting type is power-on upshift or power-off upshift and when a speed regulation duration times out or Vin<Vout×I-Offset1 is satisfied, determining that the speed regulation is completed;
when a current gear-shifting type is power-on downshift or power-off downshift and when a speed regulation duration times out or Vin>Vout×I+Offset2 is satisfied, determining that the speed regulation is completed;
wherein Vin is a rotation speed of the input shaft, Vout is a rotation speed of an output shaft of the transmission, I is a transmission gear ratio of a target gear; and Offset1 and Offset2 are positive values which are set offsets.

9. The method according to claim 1, wherein
a speed regulation duration timeout refers to a situation where a speed regulation duration has reached a maximum allowable speed regulation duration;
the maximum allowable speed regulation duration is determined according to a maximum energy value of the clutch in a slipping state, and a request torque and a slip difference of the clutch at a start moment of a speed regulation, the maximum allowable speed regulation duration is positively correlated with the maximum energy value of the clutch in the slipping state and negatively correlated with the request torque and the slip difference of the clutch at the start moment of the speed regulation.

10. The method according to claim 9, wherein:
during a mode-switching process, when a gear-shifting request is received, suspending the mode-switching process and executing the gear-shifting process, and continuing the mode-switching process after the gear-shifting process is completed;
during the gear-shifting speed regulation phase or a torque exchange phase of the gear-shifting process, when a mode-switching request is received, deferring execution of the mode-switching process, and executing the mode-switching process after the gear-shifting process is completed.

11. A vehicle controller, applied to a hybrid vehicle, **characterized by** comprising a processor and a memory storing a computer program, wherein the gear-shifting control method according to any one of claims 1 to 10 is implemented when the computer program is executed by the processor.

12. A hybrid vehicle, **characterized by** comprising the vehicle controller according to claim 11.

13. A non-transitory computer-readable storage medium storing a computer program, **characterized in that** when the computer program is executed by a processor, the gear-shifting control method according to any one of claims 1 to 10 is implemented.

## Patentansprüche

1. Gangschaltsteuerungsverfahren, das auf ein Hybridfahrzeug angewendet wird, umfassend einen Verbrennungsmotor, einen ersten Elektromotor, eine Kupplung und ein Getriebe, wobei die Übertragungsempfangsleistung durch den Verbrennungsmotor und den ersten Elektromotor durch eine Eingangswelle übertragen wird, **dadurch gekennzeichnet, dass**: das Verfahren umfasst: in einem Gangschaltprozess zwischen benachbarten Gängen Durchführen einer nachfolgenden Verarbeitung in jedem Steuerzyklus einer Gangschaltdrehzahlregelphase:
(210)Bestimmen eines Gesamtdrehzahlregelungseingriffsmoments Tsum gemäß einer Zielwinkelbeschleunigung und einer Drehträgheit und Vorverteilen von Tsum in ein Eingangswelleneingriffsmoment Taxis und ein Kupplungseingriffsmoment Tclutch, das durch die Kupplung angewendet wird; und
Bestimmen, ob Taxis eine Drehmomenteingriffsfähigkeit des ersten Elektromotors überschreitet, und
wenn bestimmt wird, dass Taxis die Drehmomenteingriffsfähigkeit des ersten Elektromotors nicht überschreitet, Verteilen von Taxis an den ersten Elektromotor und Steuern des ersten Elektromotors, um ein an den ersten Elektromotor verteiltes Drehzahlsteuerungseingriffsdrehmoment bereitzustellen; wenn bestimmt wird, dass Taxis die Drehmomenteingriffsfähigkeit des ersten Elektromotors überschreitet, aber eine Drehmomenteingriffsfähigkeit nicht überschreitet, die sowohl durch den Verbrennungsmotor als auch den ersten Elektromotor bereitgestellt werden kann, auf der Grundlage, dass die Drehmomenteingriffsfähigkeit des ersten Elektromotors nicht überschritten wird, Verteilen von Taxis zuerst an den ersten Elektromotor, dann Verteilen des Rests von Taxis an den Verbrennungsmotor und Steuern des Verbrennungsmotors, um ein an den Verbrennungsmotor verteiltes Drehzahlsteuerungseingriffsdrehmoment bereitzustellen;
wobei das Vorverteilen von Tsum in Taxis und Tclutch umfasst: wenn ein aktueller Gangschalttyp ein Hochschalten unter Last, Hochschalten ohne Last oder eine Herunterschalten ohne Last ist, Vorverteilen aller Tsum in Taxis, wobei Taxis = Tsum und Tclutch = 0 nach dem Vorverteilen; wenn ein aktueller Gangschalttyp ein Herunterschalten unter Last ist, Vorverteilen eines Teils von Tsum in Taxis und Vorverteilen des anderen Teils von Tsum in Tclutch, wobei Taxis = R1 × Tsum und Tclutch = (1 - R1) × Tsum nach dem Vorverteilen; wobei R1 gemäß einer maximalen Drehmomentfähigkeit des ersten Elektromotors und einem Anforderungsmoment des ersten Elektromotors ohne Eingriff bestimmt wird.

2. Verfahren nach Anspruch 1, wobei das Verfahren ferner umfasst:
wenn Taxis die Drehmomenteingriffsfähigkeit des ersten Elektromotors überschreitet, aber die Drehmomenteingriffsfähigkeit nicht überschreitet, die sowohl durch den Verbrennungsmotor als auch den ersten Elektromotor bereitgestellt werden kann, zuerst Verteilen eines Teils von Taxis, der die Drehmomenteingriffsfähigkeit des ersten Elektromotors nicht überschreitet, an den ersten Elektromotor, dann Verteilen des Rests von Taxis an den Verbrennungsmotor und Steuern des Verbrennungsmotors, um das an den Verbrennungsmotor verteilte Drehzahlregeleingriffsdrehmoment bereitzustellen.

3. Verfahren nach Anspruch 1, wobei die Gangschaltdrehzahlregelphase einen zunehmenden Abschnitt, einen maximalen Abschnitt und einen abnehmenden Abschnitt eines Winkelbeschleunigungswerts nacheinander umfasst;
das Verfahren ferner umfasst: zu Beginn der Gangschaltdrehzahlregelphase Bestimmen eines Gradientenwerts Ginc des Winkelbeschleunigungswerts im ansteigenden Abschnitt, eines Wertes Amax im maximalen Abschnitt und eines Gradientenwerts Gdec im abnehmenden Abschnitt;
wobei die Zielwinkelbeschleunigung wie folgt berechnet wird: im ansteigenden Abschnitt Bestimmen der Zielwinkelbeschleunigung nach Ginc und einer Differenz zwischen einem aktuellen Moment und einem Startmoment des ansteigenden Abschnitts; im maximalen Abschnitt Bestimmen der Amax als Zielwinkelbeschleunigung; im abnehmenden Abschnitt Bestimmen der Zielwinkelbeschleunigung nach Amax, Gdec und einer Differenz zwischen einem aktuellen Moment und einem Startmoment des abnehmenden Abschnitts.

4. Verfahren nach Anspruch 3, wobei Ginc gemäß einem oder mehreren der folgenden Verfahren bestimmt wird:
wenn ein aktueller Gangschalttyp ein Hochschalten unter Last ist, Bestimmen eines Mindestwerts zwischen Gonu und Gtem als Ginc, wobei Gonu gemäß einem Anforderungsmoment Treq0 der Kupplung in einem Schlupfzustand zu einem Startmoment einer Drehzahlregelung bestimmt wird und Gonu positiv mit Treq0 korreliert;
wenn ein aktueller Gangschalttyp ein Herunterschalten unter Last ist, Bestimmen eines Mindestwerts zwischen Gond und Gtem als Ginc, wobei Gond gemäß einem aktuellen Antriebsmodus bestimmt wird;
wenn ein aktueller Gangschalttyp ein Hochschalten ohne Last ist, Bestimmen eines Mindestwerts zwischen Gofu und Gtem als Ginc, wobei Gofu gemäß einem aktuellen Antriebsmodus bestimmt wird;
wenn ein aktueller Gangschalttyp ein Herunterschalten ohne Last ist, Bestimmen eines Mindestwerts zwischen Gofd und Gtem als Ginc, wobei Gofd gemäß einer aktuellen Gaspedalbetätigungsmenge und einer maximalen Leistung des ersten Elektromotors bestimmt wird und Gofd positiv mit einer Gaspedalbetätigungsmenge und der maximalen Leistung des ersten Elektromotors korreliert;
wobei Gtem ein Drehzahlregelgradientenwert ist, der gemäß einer aktuellen Temperatur der Kupplung bestimmt wird.

5. Verfahren nach Anspruch 3, wobei Amax wie folgt bestimmt wird:
Bestimmen eines Maximalwerts von Ac und Aclu als Amax, wobei Ac gemäß einer Drehzahldifferenz zwischen einer Solldrehzahl und einer Ist-Drehzahl der Eingangswelle zu einem Startmoment einer Drehzahlregelung geteilt durch eine Solldrehzahlregeldauer Tv bestimmt wird und Aclu ein Winkelbeschleunigungswert ist, der gemäß einer aktuellen Temperatur der Kupplung in einem Schlupfzustand bestimmt wird.

6. Verfahren nach Anspruch 5, wobei die Solldrehzahlregelungsdauer Tv gemäß einem oder mehreren der folgenden Verfahren bestimmt wird:
wenn ein aktueller Gangschalttyp ein Hochschalten unter Last ist, Bestimmen eines Mindestwerts zwischen Tonu und Tclu als Tv, wobei Tonu gemäß mindestens einem von einem aktuellen Antriebsmodus, der Drehzahldifferenz und einem Drehmoment der Eingangswelle ohne Eingriff bestimmt wird, Tonu positiv mit der Drehzahldifferenz korreliert und negativ mit dem Drehmoment der Eingangswelle ohne Eingriff korreliert;
wenn ein aktueller Gangschalttyp ein Herunterschalten unter Last ist, Bestimmen eines Mindestwerts zwischen Tond und Tclu als Tv, wobei Tond durch Multiplizieren einer Dauer mit einem ersten Koeffizienten erhalten wird, die Dauer gemäß mindestens einem von einem aktuellen Antriebsmodus, der Drehzahldifferenz und einem Drehmoment der Eingangswelle ohne Eingriff bestimmt wird, der erste Koeffizient gemäß einem Verhältnis von einem maximalen Drehmoment zu einem Ist-Drehmoment des ersten Elektromotors bestimmt wird und Tond positiv mit der Drehzahldifferenz korreliert und negativ mit dem Drehmoment der Eingangswelle ohne Eingriff und dem Verhältnis korreliert;
wenn ein aktueller Gangschalttyp ein Hochschalten ohne Last ist, Bestimmen eines Mindestwerts zwischen Tofd und Tclu als Tv, wobei Tofd gemäß mindestens einem von einem aktuellen Antriebsmodus, der Drehzahldifferenz und einem Drehmoment der Eingangswelle ohne Eingriff bestimmt wird, Tofd positiv mit der Drehzahldifferenz korreliert und negativ mit dem Drehmoment der Eingangswelle ohne Eingriff korreliert;
wenn ein aktueller Gangschalttyp ein Herunterschalten ohne Last ist, Bestimmen eines Mindestwerts zwischen Tofu und Tclu als Tv, wobei Tofu durch Teilen einer Dauer durch einen zweiten Koeffizienten erhalten wird, die Dauer gemäß mindestens einem von einem aktuellen Antriebsmodus, der Drehzahldifferenz und einem Drehmoment der Eingangswelle ohne Eingriff bestimmt wird, der zweite Koeffizient gemäß einer aktuellen Gaspedalbetätigungsmenge und einer maximalen Leistung des ersten Elektromotors bestimmt wird, Tofu positiv mit der Drehzahldifferenz korreliert und negativ mit dem Drehmoment der Eingangswelle ohne Eingriff, einer Gaspedalbetätigungsmenge und der maximalen Leistung des ersten Elektromotors korreliert;
wobei Tclu eine maximale Drehzahlregeldauer ist, die gemäß einem maximalen Energiewert der Kupplung bestimmt wird.

7. Verfahren nach Anspruch 3, wobei Gdec wie folgt bestimmt wird:
Bestimmen eines Mindestwerts zwischen Gcon und Gtem als Gdec, wobei Gcon gemäß einer Drehzahldifferenz zwischen einer Solldrehzahl und einer Ist-Drehzahl der Eingangswelle zu einem Startmoment einer Drehzahlregelung und einem Drehmoment der Eingangswelle ohne Eingriff bestimmt wird; und Gtem ein Drehzahlregelgradientenwert ist, der gemäß einer aktuellen Temperatur der Kupplung in einem Schlupfzustand bestimmt wird.

8. Verfahren nach Anspruch 1, wobei das Verfahren ferner umfasst:
wenn ein aktueller Gangschalttyp ein Hochschalten unter Last oder ein Hochschalten ohne Last ist und wenn eine Drehzahlregeldauer abläuft oder Vin < Vout × I - Offset1 erfüllt ist, Bestimmen, dass die Drehzahlregelung abgeschlossen ist;
wenn ein aktueller Gangschalttyp ein Herunterschalten unter Last oder ein Herunterschalten ohne Last ist und wenn eine Drehzahlregeldauer abläuft oder Vin > Vout × I + Offset2 erfüllt ist, Bestimmen, dass die Drehzahlregelung abgeschlossen ist;
wobei Vin eine Drehzahl der Eingangswelle ist, Vout eine Drehzahl einer Ausgangswelle des Getriebes ist, I ein Übersetzungsverhältnis eines Zielzahnrads ist; und Offset1 und Offset2 positive Werte sind, die festgelegte Offsets sind.

9. Verfahren nach Anspruch 1, wobei
sich eine Zeitüberschreitung der Drehzahlregeldauer auf eine Situation bezieht, in der eine Drehzahlregeldauer eine maximale zulässige Drehzahlregeldauer erreicht hat;
die maximale zulässige Drehzahlregeldauer gemäß einem maximalen Energiewert der Kupplung in einem Schlupfzustand und einem Anforderungsmoment und einer Schlupfdifferenz der Kupplung zu einem Startmoment einer Drehzahlregelung bestimmt wird, die maximale zulässige Drehzahlregeldauer positiv mit dem maximalen Energiewert der Kupplung in dem Schlupfzustand korreliert und negativ mit dem Anforderungsmoment und der Schlupfdifferenz der Kupplung zu dem Startmoment der Drehzahlregelung korreliert.

10. Verfahren nach Anspruch 9, wobei:
während eines Modusschaltprozesses, wenn eine Gangschaltanforderung empfangen wird, Aussetzen des Modusschaltprozesses und Ausführen des Gangschaltprozesses und Fortsetzen des Modusschaltprozesses, nachdem der Gangschaltprozess abgeschlossen ist;
während der Gangschaltdrehzahlregelphase oder einer Drehmomentaustauschphase des Gangschaltprozesses, wenn eine Modusschaltanforderung empfangen wird, Verzögern der Ausführung des Modusschaltprozesses und Ausführen des Modusschaltprozesses, nachdem der Gangschaltprozess abgeschlossen ist.

11. Fahrzeugsteuerung, die auf ein Hybridfahrzeug angewendet wird, **dadurch gekennzeichnet, dass** sie einen Prozessor und einen Speicher, auf dem ein Computerprogramm gespeichert ist, umfasst, wobei das Gangschaltsteuerungsverfahren nach einem der Ansprüche 1 bis 10 umgesetzt wird, wenn das Computerprogramm durch den Prozessor ausgeführt wird.

12. Hybridfahrzeug, **dadurch gekennzeichnet, dass** es die Fahrzeugsteuerung nach Anspruch 11 umfasst.

13. Nichtflüchtiges computerlesbares Speichermedium, auf dem ein Computerprogramm gespeichert ist, **dadurch gekennzeichnet, dass**, wenn das Computerprogramm durch einen Prozessor ausgeführt wird, das Gangschaltsteuerverfahren nach einem der Ansprüche 1 bis 10 umgesetzt wird.

## Revendications

1. Procédé de commande de changement de rapport, appliqué à un véhicule hybride comprenant un moteur thermique, un premier moteur électrique, un embrayage et une transmission, la transmission recevant une puissance transmise par le moteur thermique et le premier moteur électrique à travers un arbre d'entrée, **caractérisé en ce que** : le procédé comprend : dans un processus de changement de rapport entre des rapports adjacents, la réalisation du traitement suivant dans chaque cycle de commande d'une phase de régulation de vitesse de changement de rapport :
(210)la détermination d'un couple d'intervention de régulation de vitesse total Tsum en fonction d'une accélération angulaire cible et d'une inertie de rotation, et la pré-distribution de Tsum en un couple d'intervention d'arbre d'entrée Taxis et un couple d'intervention d'embrayage Tclutch appliqué par l'embrayage ; et
la détermination si Taxis dépasse une capacité d'intervention de couple du premier moteur électrique, et
lors de la détermination que Taxis ne dépasse pas la capacité d'intervention de couple du premier moteur électrique, la distribution de Taxis au premier moteur électrique, et la commande du premier moteur électrique pour fournir un couple d'intervention de régulation de vitesse distribué au premier moteur électrique ; lors de la détermination que Taxis dépasse la capacité d'intervention de couple du premier moteur électrique mais ne dépasse pas une capacité d'intervention de couple qui peut être fournie à la fois par le moteur thermique et le premier moteur électrique, sur la base du non-dépassement de la capacité d'intervention de couple du premier moteur électrique, la distribution de Taxis au premier moteur électrique en premier, puis la distribution du reste de Taxis au moteur thermique, et la commande du moteur thermique pour fournir un couple d'intervention de régulation de vitesse distribué au moteur thermique ;
dans lequel la pré-distribution de Tsum en Taxis et Tclutch comprend :
lorsqu'un type de changement de rapport actuel est un passage au rapport supérieur avec puissance, un passage au rapport supérieur sans puissance ou un rétrogradage sans puissance, la pré-distribution de la totalité de Tsum en Taxis, dans lequel Taxis=Tsum et Tclutch=0 après la pré-distribution ; lorsqu'un type de changement de rapport actuel est un rétrogradage avec puissance, la pré-distribution d'une partie de Tsum en Taxis et la pré-distribution de l'autre partie de Tsum en Tclutch, dans lequel Taxis=R1×Tsum et Tclutch=(1-R1)×Tsum après la pré-distribution ; dans lequel R1 est déterminé en fonction d'une capacité de couple maximum du premier moteur électrique et d'un couple de requête de premier moteur électrique sans intervention.

2. Procédé selon la revendication 1, dans lequel le procédé comprend en outre :
lorsque Taxis dépasse la capacité d'intervention de couple du premier moteur électrique mais ne dépasse pas la capacité d'intervention de couple qui peut être fournie à la fois par le moteur thermique et le premier moteur électrique, la distribution d'une partie de Taxis qui ne dépasse pas la capacité d'intervention de couple du premier moteur électrique au premier moteur électrique en premier, puis la distribution du reste de Taxis au moteur thermique, et la commande du moteur thermique pour fournir le couple d'intervention de régulation de vitesse distribué au moteur thermique.

3. Procédé selon la revendication 1, dans lequel la phase de régulation de vitesse de changement de rapport comprend une section croissante, une section maximum et une section décroissante d'une valeur d'accélération angulaire en séquence ; le procédé comprend en outre : au début de la phase de régulation de vitesse de changement de rapport, la détermination d'une valeur de gradient Ginc de la valeur d'accélération angulaire dans la section croissante, d'une valeur Amax dans la section maximum et d'une valeur de gradient Gdec dans la section décroissante ;
dans lequel l'accélération angulaire cible est calculée comme suit : dans la section croissante, la détermination de l'accélération angulaire cible en fonction de Ginc et d'une différence entre un instant actuel et un instant de début de la section croissante ; dans la section maximum, la détermination de Amax en tant qu'accélération angulaire cible ; dans la section décroissante, la détermination de l'accélération angulaire cible en fonction de Amax, Gdec et d'une différence entre un instant actuel et un instant de début de la section décroissante.

4. Procédé selon la revendication 3, dans lequel Ginc est déterminé selon l'un ou plusieurs des procédés suivants :
lorsqu'un type de changement de rapport actuel est un passage au rapport supérieur avec puissance, la détermination d'une valeur minimum entre Gonu et Gtem en tant que Ginc, dans lequel Gonu est déterminé en fonction d'un couple de requête Treq0 de l'embrayage dans un état de glissement à un instant de début d'une régulation de vitesse, et Gonu est corrélé positivement avec Treq0 ;
lorsqu'un type de changement de rapport actuel est un rétrogradage avec puissance, la détermination d'une valeur minimum entre Gond et Gtem en tant que Ginc, dans lequel Gond est déterminé en fonction d'un mode de conduite actuel ;
lorsqu'un type de changement de rapport actuel est un passage au rapport supérieur sans puissance, la détermination d'une valeur minimum entre Gofu et Gtem en tant que Ginc, dans lequel Gofu est déterminé en fonction d'un mode de conduite actuel ;
lorsqu'un type de changement de rapport actuel est un rétrogradage sans puissance, la détermination d'une valeur minimum entre Gofd et Gtem en tant que Ginc, dans lequel Gofd est déterminé en fonction d'un degré d'enfoncement actuel de la pédale d'accélérateur et d'une puissance maximum du premier moteur électrique, et Gofd est corrélé positivement avec un degré d'enfoncement de la pédale d'accélérateur et la puissance maximum du premier moteur électrique ;
dans lequel Gtem est une valeur de gradient de régulation de vitesse déterminée en fonction d'une température actuelle de l'embrayage.

5. Procédé selon la revendication 3, dans lequel Amax est déterminé comme suit :
la détermination d'une valeur maximum de Ac et Aclu en tant que Amax, dans lequel Ac est déterminé en fonction d'une différence de vitesse de rotation entre une vitesse de rotation cible et une vitesse de rotation réelle de l'arbre d'entrée à un instant de début d'une régulation de vitesse divisée par une durée de régulation de vitesse cible Tv, et Aclu est une valeur d'accélération angulaire déterminée en fonction d'une température actuelle de l'embrayage dans un état de glissement.

6. Procédé selon la revendication 5, dans lequel la durée de régulation de vitesse cible Tv est déterminée selon l'un ou plusieurs des procédés suivants :
lorsqu'un type de changement de rapport actuel est un passage au rapport supérieur avec puissance, la détermination d'une valeur minimum entre Tonu et Tclu en tant que Tv, dans lequel Tonu est déterminé en fonction d'au moins l'un d'un mode de conduite actuel, de la différence de vitesse de rotation et d'un couple de l'arbre d'entrée sans intervention, Tonu est corrélé positivement avec la différence de vitesse de rotation et corrélé négativement avec le couple de l'arbre d'entrée sans intervention ;
lorsqu'un type de changement de rapport actuel est un rétrogradage avec puissance, la détermination d'une valeur minimum entre Tond et Tclu en tant que Tv, dans lequel Tond est obtenu en multipliant une durée par un premier coefficient, la durée est déterminée en fonction d'au moins l'un d'un mode de conduite actuel, de la différence de vitesse de rotation et d'un couple de l'arbre d'entrée sans intervention, le premier coefficient est déterminé en fonction d'un rapport d'un couple maximum sur un couple réel du premier moteur électrique, et Tond est corrélé positivement avec la différence de vitesse de rotation et corrélé négativement avec le couple de l'arbre d'entrée sans intervention et le rapport ;
lorsqu'un type de changement de rapport actuel est un passage au rapport supérieur sans puissance, la détermination d'une valeur minimum entre Tofd et Tclu en tant que Tv, dans lequel Tofd est déterminé en fonction d'au moins l'un d'un mode de conduite actuel, de la différence de vitesse de rotation et d'un couple de l'arbre d'entrée sans intervention, Tofd est corrélé positivement avec la différence de vitesse de rotation et corrélé négativement avec le couple de l'arbre d'entrée sans intervention ;
lorsqu'un type de changement de rapport actuel est un rétrogradage sans puissance, la détermination d'une valeur minimum entre Tofu et Tclu en tant que Tv, dans lequel Tofu est obtenu en divisant une durée par un deuxième coefficient, la durée est déterminée en fonction d'au moins l'un d'un mode de conduite actuel, de la différence de vitesse de rotation et d'un couple de l'arbre d'entrée sans intervention, le deuxième coefficient est déterminé en fonction d'un degré d'enfoncement actuel de la pédale d'accélérateur et d'une puissance maximum du premier moteur électrique, Tofu est corrélé positivement avec la différence de vitesse de rotation et corrélé négativement avec le couple de l'arbre d'entrée sans intervention, un degré d'enfoncement de la pédale d'accélérateur et la puissance maximum du premier moteur électrique ;
dans lequel Tclu est une durée de régulation de vitesse maximum déterminée en fonction d'une valeur d'énergie maximum de l'embrayage.

7. Procédé selon la revendication 3, dans lequel Gdec est déterminé comme suit :
la détermination d'une valeur minimum entre Gcon et Gtem en tant que Gdec, dans lequel Gcon est déterminé en fonction d'une différence de vitesse de rotation entre une vitesse de rotation cible et une vitesse de rotation réelle de l'arbre d'entrée à un instant de début d'une régulation de vitesse, et d'un couple de l'arbre d'entrée sans intervention ; et Gtem est une valeur de gradient de régulation de vitesse déterminée en fonction d'une température actuelle de l'embrayage dans un état de glissement.

8. Procédé selon la revendication 1, dans lequel le procédé comprend en outre :
lorsqu'un type de changement de rapport actuel est un passage au rapport supérieur avec puissance ou un passage au rapport supérieur sans puissance et lorsqu'une durée de régulation de vitesse expire ou Vin<Vout×I-Offset1 est satisfait, la détermination que la régulation de vitesse est achevée ;
lorsqu'un type de changement de rapport actuel est un rétrogradage avec puissance ou un rétrogradage sans puissance et lorsqu'une durée de régulation de vitesse expire ou Vin>Vout×I+Offset2 est satisfait, la détermination que la régulation de vitesse est achevée ;
dans lequel Vin est une vitesse de rotation de l'arbre d'entrée, Vout est une vitesse de rotation d'un arbre de sortie de la transmission, I est un rapport d'engrenage de transmission d'un rapport cible ; et Offset 1 et Offset2 sont des valeurs positives qui sont des décalages définis.

9. Procédé selon la revendication 1, dans lequel
une expiration de durée de régulation de vitesse fait référence à une situation où une durée de régulation de vitesse a atteint une durée de régulation de vitesse admissible maximum ;
la durée de régulation de vitesse admissible maximum est déterminée en fonction d'une valeur d'énergie maximum de l'embrayage dans un état de glissement, et d'un couple de requête ainsi que d'une différence de glissement de l'embrayage à un instant de début d'une régulation de vitesse, la durée de régulation de vitesse admissible maximum est corrélée positivement avec la valeur d'énergie maximum de l'embrayage dans l'état de glissement et corrélée négativement avec le couple de requête et la différence de glissement de l'embrayage à l'instant de début de la régulation de vitesse.

10. Procédé selon la revendication 9, dans lequel :
pendant un processus de commutation de mode, lorsqu'une requête de changement de rapport est reçue, la suspension du processus de commutation de mode et l'exécution du processus de changement de rapport, et la poursuite du processus de commutation de mode après que le processus de changement de rapport est achevé ;
pendant la phase de régulation de vitesse de changement de rapport ou une phase d'échange de couple du processus de changement de rapport, lorsqu'une requête de commutation de mode est reçue, le report de l'exécution du processus de commutation de mode, et l'exécution du processus de commutation de mode après que le processus de changement de rapport est achevé.

11. Dispositif de commande de véhicule, appliqué à un véhicule hybride, **caractérisé en ce qu'**il comprend un processeur et une mémoire stockant un programme informatique, dans lequel le procédé de commande de changement de rapport selon l'une quelconque des revendications 1 à 10 est mis en œuvre lorsque le programme informatique est exécuté par le processeur.

12. Véhicule hybride, **caractérisé en ce qu'**il comprend le dispositif de commande de véhicule selon la revendication 11.

13. Support de stockage lisible par ordinateur non transitoire stockant un programme informatique, **caractérisé en ce que**, lorsque le programme informatique est exécuté par un processeur, le procédé de commande de changement de rapport selon l'une quelconque des revendications 1 à 10 est mis en œuvre.
